(19) Europäisches Patentamt
European Patent Office
Office européen des brevets

(11) **EP 2 725 347 B1**

(12) **EUROPEAN PATENT SPECIFICATION**

(45) Date of publication and mention
of the grant of the patent:
**26.09.2018 Bulletin 2018/39**

(51) Int Cl.:
**G01N 21/64** (2006.01)    **C12Q 1/68** (2018.01)
**G01N 15/14** (2006.01)

(21) Application number: **12805017.6**

(22) Date of filing: **27.06.2012**

(86) International application number:
**PCT/JP2012/066393**

(87) International publication number:
**WO 2013/002261 (03.01.2013 Gazette 2013/01)**

(54) **METHOD FOR DETECTING TARGET PARTICLES**

VERFAHREN ZUM NACHWEIS VON ZIELPARTIKELN

PROCÉDÉ DE DÉTECTION DE PARTICULES CIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2011 JP 2011142033**

(43) Date of publication of application:
**30.04.2014 Bulletin 2014/18**

(73) Proprietor: **Olympus Corporation
Tokyo 192-8507 (JP)**

(72) Inventor: **NISHIKAWA, Kazutaka
Tokyo 192-8507 (JP)**

(74) Representative: **Gunzelmann, Rainer
Wuesthoff & Wuesthoff
Patentanwälte PartG mbB
Schweigerstraße 2
81541 München (DE)**

(56) References cited:
WO-A1-2011/108369    WO-A1-2012/014778
WO-A1-2012/014778    JP-A- 2007 006 890
JP-A- 2008 116 440    JP-A- 2009 288 161
JP-A- 2010 190 730    JP-A- 2011 002 415
JP-A- 2011 002 415    JP-A- 2011 036 150
JP-A- 2011 508 219    US-A1- 2005 213 090
US-A1- 2006 219 939    US-A1- 2009 159 812
US-A1- 2009 230 324    US-A1- 2009 312 188

**Description**

TECHNICAL FIELD

The present invention relates to a method for detecting target particles that are dispersed in a sample solution and move randomly therein by using an optical system capable of detecting light from a microregion in the solution, such as an optical system of a confocal microscope or multi-photon microscope.

The present application claims priority on the basis of Japanese Patent Application No. 2011-142033, filed in Japan on June 27, 2011.

BACKGROUND ART

Due to progress made in the field of optical measurement technology in recent years, it has become possible to detect and measure faint light at the level of a single photon or single fluorescent molecule using the optical system of a confocal microscope and ultra-high-sensitivity photodetection technology capable of performing photon counting (detecting individual photons). Therefore, various devices or methods have been proposed that detect interactions between molecules such as biomolecules or coupling and dissociation reactions between molecules using such faint light measurement technology. For example, in fluorescence correlation spectroscopy (FCS: see, for example, Patent Documents 1 and 2 and Non-Patent Documents 1 to 3), fluorescence intensity is measured from fluorescent molecules or fluorescent-labeled molecules (such as fluorescent molecules) entering and leaving a microregion (confocal region where laser light of a microscope is focused; referred to as confocal volume) in a sample solution using the optical system of a laser confocal microscope and photon counting technology. Information such as the speed of movement, size or concentration of fluorescent molecules and the like is acquired, or various phenomena in the manner of changes in molecular structure or size, molecule coupling and dissociation reactions or dispersion and aggregation are detected, based on the average retention time (transitional diffusion time) of fluorescent molecules and the like in the microregion and the average value of the number of molecules remaining therein determined from the value of an autocorrelation function of the measured fluorescence intensity. In addition, in fluorescence intensity distribution analysis (FIDA: see, for example, Patent Document 3) and photon counting histograms (PCH: see, for example, Patent Document 4), a histogram is generated of the fluorescence intensity of fluorescent molecules and the like entering and leaving a measured confocal volume in the same manner as FCS, and by fitting a statistical model formula to the distribution of that histogram, the average value of the characteristic brightness of the fluorescent molecules and the like and the average value of the number of molecules remaining in the confocal volume are calculated. Changes in molecular structure and size, coupling and/or dissociation, dispersion or aggregation and the like are then estimated based on this information. Moreover, Patent Documents 5 and 6 propose a method for detecting a fluorescent substance based on the time lapse of a fluorescent signal of a sample solution measured using the optical system of a confocal microscope. Patent Document 7 proposes a signal arithmetic processing technology for detecting the presence of fluorescent fine particles in a flow or on a substrate by measuring faint light from fluorescent fine particles that have passed through a flow cytometer or fluorescent fine particles immobilized on a substrate using photon counting technology.

In particular, according to methods using microregion fluorescence measurement technology using the optical system of a confocal microscope and photon counting technology in the manner of FCS or FIDA and the like, the sample required for measurement is only required to be an extremely low concentration and extremely small amount in comparison with that used in the past (since the amount used for a single measurement is roughly only several tens of microliters). In addition, measurement time is shortened considerably (measurement of a duration on the order of several seconds for a single measurement is repeated several times). Thus, these technologies are expected to be utilized as powerful tools that make it possible to carry out experimentation or testing less expensively and faster in comparison with conventional biochemical methods in the case of performing analyses on scarce or expensive samples frequently used in fields such as medical or biochemical research and development, or in the case of a large number of specimens such as when clinically diagnosing diseases or screening physiologically active substances.

On the other hand, in the case the detection target consists of nucleic acid molecules, technologies are known for enhancing nucleic acid concentration in a sample solution prior to detecting that detection target in the form of nucleic acid molecules. For example, a method is known that consists of measuring a target nucleic acid molecule in a sample solution after having concentrated the sample solution by evaporating the solvent there from (see, for example, Patent Document 8). In addition, a method is known that consists of measuring nucleic acid concentration in a sample solution using a chemical analysis device having a rotating mechanism for separating and concentrating a target component and a detection mechanism that detects fluorescent light in order to measure the concentration of that specific component (see, for example, Patent Document 9). In addition to methods used to concentrate a sample solution, nucleic acid concentration can also be enhanced by isolating and purifying nucleic acid molecules from a sample solution. As an example of this method, a method is known that consists of recovering a precipitate, in which nucleic acid molecules have been concentrated by adding an anionic detergent and chaotropic salt to a sample, and precipitating nucleic acid molecules (see, for example, Patent Document 10). In addition, a method is also known that consists of capturing nucleic acid molecules in a sample using a membrane or anion exchange matrix on which nucleic acid molecules have been immobilized, followed by releasing the nucleic acid molecules from the membrane or matrix (see, for example, Patent Document 11 or Patent Document 12).

Patent Document 13 describes a single molecular analyzer. The presence or absence of a single molecule is detected using electromagnetic radiation that is translated through a sample. The electromagnetic radiation excites a fluorescent moiety. The concentration in the sample is such that an interrogating space is unlikely to contain more than one single molecule of interest. A scanning analyzer system includes a translating system for translating the interrogating space through a portion of the sample.

Patent Document 14 describes an apparatus for detecting a few hundreds molecules of biological particles in a sample volume on the order of a nanoliter or picoliter. Target particles are concentrated using dielectrophoresis. The apparatus includes a fluorometer for detecting the particles using fluorescence.

Patent Document 15 describes a system for sequencing a nucleic acid by detecting a fluorescent nucleotide analogue incorporated at an end of a strand of the nucleic acid. A unique tag of the fluorescent nucleotide analogue is detected by optically scanning a substrate.

Prior Art Documents

Patent Documents

Patent Document 1: Japanese Unexamined Patent Application, First Publication No. 2005-098876
Patent Document 2: Japanese Unexamined Patent Application, First Publication No. 2008-292371
Patent Document 3: Japanese Patent (Granted) Publication No. 4023523
Patent Document 4: International Publication No. WO 2008-080417
Patent Document 5: Japanese Unexamined Patent Application, First Publication No. 2007-20565
Patent Document 6: Japanese Unexamined Patent Application, First Publication No. 2008-116440
Patent Document 7: Japanese Unexamined Patent Application, First Publication No. H4-337446
Patent Document 8: Japanese Unexamined Patent Application, First Publication No. 2008-000045
Patent Document 9: Japanese Unexamined Patent Application, First Publication No. 2003-344288
Patent Document 10: Japanese Unexamined Patent Application (Translation of PCT Application) No. 2006-526591
Patent Document 11: Japanese Unexamined Patent Application (Translation of PCT Application) No. 2002-528093
Patent Document 12: Japanese Unexamined Patent Application (Translation of PCT Application) No. 2009-518020
Patent Document 13: US 2009/0159812 A1
Patent Document 14: US 2006/0219939 A1
Patent Document 15: US 2009/0312188 A1

Non-Patent Documents

Non-Patent Document 1: Kinjo, M., Proteins, Nucleic Acids and Enzymes, 1999, Vol. 44, No. 9, pp. 1431-1438
Non-Patent Document 2: Meyer-Alms, Fluorescence Correlation Spectroscopy, R. Rigler, ed., Springer, Berlin, 2000, pp. 204-224
Non-Patent Document 3: Kato, N., et al., Gene & Medicine, 2002, Vol. 6, No. 2, pp. 271-277

DISCLOSURE OF THE INVENTION

Problems to be Solved by the Invention

Generally speaking, in the case of optical analysis technologies such as the aforementioned FCS, FIDA or PCH, the magnitude of chronological fluctuations in measured fluorescence intensity are calculated by statistical processing, and various properties of fluorescent molecules and the like entering and leaving a microregion in a sample solution are determined based on the magnitude of those fluctuations. Thus, in order to obtain meaningful results using the aforementioned optical analysis technologies, the concentration or number density of the fluorescent molecules and the like capable of being observed in a sample solution is adjusted so that a number of fluorescent molecules and the like able to be statistically processed enter and leave a microregion within the duration of a single measurement having a length on the order of several seconds, and preferably, so that roughly only one fluorescent molecule and the like is present in the microregion at all times (and typically, the concentration of fluorescent molecules and the like is roughly 1 nM or more since the volume of the confocal volume is about 1 fL) . In other words, when the concentration or number density of target particles in a sample solution falls considerably below the degree that allows statistical processing thereof (such as when it falls considerably below 1 nM), a state occurs in which the observation target only rarely enters the microregion during the measurement time. Whereupon, in addition to a state in which the observation target is not present at all in the microregion for a long period of time being included in the measurement results of fluorescence intensity, a meaningful amount of observed fluorescence intensity decreases. As a result, it becomes difficult to obtain meaningful or highly accurate analysis results with optical analysis technologies based on statistical fluctuations in fluorescence intensity as described above.

In the methods for detecting fluorescent substances using the optical system of a confocal microscope described in Patent Documents 5 and 6, instead of carrying out statistical processing relating to fluctuations in fluorescence intensity as described above, methods are disclosed that allow the presence or absence of a target in the form of fluorescent molecules and the like in a sample to be determined according to the presence or absence of the generation of a fluorescent signal of significant intensity during a measurement time extending for several seconds, thereby allowing the obtaining of a correlation between the frequency of the fluorescent signal of significant intensity and the number of fluorescent molecules or other particles in the sample. In Patent Document 6 in particular, detection accuracy is suggested to be improved by generating a random flow in a sample solution by stirring. However, in these methods as well, detection is limited to the presence of fluorescent molecules and the like that statistically enter a microregion due to diffusion or random flow. Namely, since the behavior of fluorescent molecules or other particles in the microregion cannot be determined, a technology is not disclosed for, for example, particle counting or quantitatively determining the concentration or number density of particles. In addition, the technology disclosed in Patent Document 7 is a technology for individually detecting the presence of fluorescent fine particles flowing through a flow cytometer or immobilized on a substrate, and is not a technology for detecting molecules or colloidal particles dissolved or dispersed in an ordinary state in a sample solution, namely particles randomly moving in a sample solution. Namely, a technology is not disclosed for quantitatively determining the concentration or number density of particles dissolved or dispersed in a sample solution. In addition, the technology of Patent Document 7 includes a process consisting of measuring in a flow cytometer or immobilizing fluorescent particles on a substrate. Consequently, the amount of sample required for testing is much larger in comparison with the case of optical analysis technologies such as FCS, FIDA or PCH, and requires the person performing testing to perform a complex and sophisticated procedure.

Thus, an object of the present invention is to provide a method for detecting target particles dispersed and moving randomly in a sample solution in a shorter measurement time by employing a novel optical analysis technology that does not include statistical processing like that carried out in optical analysis technologies such as FCS, FIDA or PCH, and allows detection of the status or properties of target particles in a sample solution in which the concentration or number density of the target particles is at a lower level than the level used in the aforementioned optical analysis technologies.

Means for Solving the Problems

Here, in the case of indirectly detecting a particle dispersed and randomly moving in a sample solution by using as an indicator thereof light emitted from a luminescent probe bound to the particle, by detecting the particle bound to the luminescent probe using a scanning molecule counting method, even in the case the concentration of the target particle in the sample solution is lower than in the case of being detected by a conventional optical analysis technology such as FCS, the particle bound to the luminescent probe was found to be able to be detected with favorable sensitivity. Moreover, by preliminarily enhancing the concentration of the target particles in the sample solution prior to measuring by scanning molecule counting, the target particle was found to be able to be detected in a shorter measurement time.

Here, the scanning molecule counting method refers to a novel optical analysis technology proposed in Japanese Patent Application No. 2010-044714. A method for detecting a target particle dispersed and moving randomly in a sample solution according to claim 1 is provided. Further embodiments are defined in the appended dependent claims.

According to a first aspect of the present disclosure, a method for detecting a target particle is a method for detecting a particle dispersed and moving randomly in a sample solution, comprising:

(a) a step for concentrating a test sample so as to enhance the concentration of target particles in the test sample;

(b) a step for preparing a sample solution containing the test sample concentrated in step (a) and a luminescent probe that binds to the target particle, and allowing the target particle and the luminescent probe to bind in the sample solution, and

(c) a step for counting the number of target particles bound to the luminescent probe present in the sample solution prepared in step (b); wherein,

the luminescence properties of the released light differ between the state in which the luminescent probe is bound to the target particle and the state in which the luminescent probe is present alone, and

counting of the number of target particles bound to the luminescent probe in step (c) is carried out by:

a step for moving the location of a photodetection region of an optical system in the sample solution using the optical system of a confocal microscope or multi-photon microscope,

a step for individually detecting target particles bound to the luminescent probe by detecting a light signal released from the luminescent probe when bound to the target particles present in the photodetection region while moving the location of the photodetection region of the optical system in the sample solution, and

a step for counting the number of target particles detected during movement of the location of the photodetection region by counting the number of individually detected target particles bound to the luminescent probe.

According a second aspect of the present disclosure, in the method for detecting a target particle according to the first aspect of the present disclosure, the number density of the target particles in the sample solution in step (c) is less than or equal to 1 molecule per volume ($V_d$) of the photodetection region.

According to a third aspect of the present disclosure, in the method for detecting a target particle according to either the first aspect or second aspect of the present disclosure, the target particle is a nucleic acid molecule, and step (a) is a step for purifying and concentrating nucleic acid molecule in the test sample.

According to a fourth aspect of the present disclosure, in the method for detecting a target particle according to either the first aspect or second aspect of the present disclosure, step (a) is a step for specifically recovering and concentrating the target particle from the test sample.

According to a fifth aspect of the present disclosure, in the method for detecting a target particle according to any of the first to fourth aspects of the present disclosure, the location of the photodetection region is moved at a prescribed speed in the step for moving the location of the photodetection region.

According to a sixth aspect of the present disclosure, in the method for detecting a target particle according to any of the first to fifth aspects of the present disclosure, the location of the photodetection region is moved at a speed faster than the diffusion movement speed of target particle bound to the luminescent probe in the step for moving the location of the photodetection region.

According to a seventh aspect of the present disclosure, in the method for detecting a target particle according to any of the first to sixth aspects of the present disclosure, in the step for individually detecting target particles bound to the luminescent probe by detecting a light signal from individual target particles bound to the luminescent probe from the detected light, the entry of a single target particle bound to the luminescent probe into the photodetection region is detected based on the form of a detected chronological light signal.

According to an eighth aspect of the present disclosure, in the method for detecting a target particle according to any of the first to seventh aspects of the present disclosure, the luminescent probe has an energy donor site and energy acceptor site that cause the occurrence of a fluorescence energy transfer phenomenon when a luminescent probe mutually approaches, the distance between the energy donor site and the energy acceptor site differs between the state in which the luminescent probe is bound to the particle and the state in which the luminescent probe is not bound to the particle, and luminescence properties of light released from the luminescent probe differs between the state in which the luminescent probe is bound to the target particle and the state in which the luminescent probe is present alone.

According to a ninth aspect of the present disclosure, in the method for detecting a target particle according to any of the first to eighth aspects of the present disclosure, the target particle is a nucleic acid molecule, and the luminescent probe is a single-stranded nucleic acid molecule that specifically hybridizes with the target particle, and to which is bound at least one of a

fluorescent substance composing an energy donor and a substance composing an energy acceptor in fluorescence energy transfer phenomenon.

According to a tenth aspect of the present disclosure, the method for detecting a target particle is a method for detecting a target particle dispersed and moving randomly in a sample solution, comprising:

(a') a step for preparing a sample solution containing a test sample and a luminescent probe that binds to a target particle,

(b') a step for binding the target particle and the luminescent probe in the sample solution prepared in step (a'), and

(c') a step for counting the number of target particles bound to the luminescent probe present in the sample solution prepared in step (b'); wherein,

the luminescence properties of the released light differ between the state in which the luminescent probe is bound to the target particle and the state in which the luminescent probe is present alone, and

counting of the number of target particles bound to the luminescent probe in step (c') is carried out by:

a step for moving the location of a photodetection region of an optical system in the sample solution using the optical system of a confocal microscope or multi-photon microscope,

a step for individually detecting target particles bound to the luminescent probe by detecting a light signal released from the luminescent probe when bound to the target particle present in the photodetection region while moving the location of the photodetection region of the optical system in the sample solution, and

a step for counting the number of target particles detected during movement of the location of the photodetection region by counting the number of individually detected target particles bound to the luminescent probe, and concentration treatment is carried out so as to enhance the concentration of target particles in the sample solution either after step (a') or after step (b').

Effects of the Invention

In the scanning molecule counting method used in the aforementioned method for detecting target particles, statistical processing involving the determination of fluctuations in fluorescence intensity is not carried out. Consequently, according to the aforementioned method for detecting target particles, the target particles in a sample can be detected even in cases in which target particles to be analyzed are only present in a sample in such a small amount that they cannot be detected by conventional optical analysis technologies such as FCS. Moreover, in the aforementioned method for detecting target particles, since the concentration of the target particles in a sample solution is enhanced by concentration treatment prior to measuring with the scanning molecule counting method, target particles can be detected in a shorter measurement time than in the case of not carrying out concentration treatment.

BRIEF DESCRIPTION OF THE DRAWINGS

FIG.1A is a schematic diagram of the internal structure of an optical analysis device for a scanning molecule counting method.

FIG. 1B is a schematic diagram of a confocal volume (observation region of a confocal microscope).

FIG. 1C is a schematic diagram of a mechanism for moving the location of a photodetection region in a sample solution by changing the orientation of a mirror 7.

FIG. 2A is a schematic diagram explaining the principle of photodetection using optical analysis technology for a scanning molecule counting method.

FIG. 2B is a schematic diagram of chronological changes in fluorescence intensity measured using optical analysis technology for a scanning molecule counting method.

FIG. 3A is a model diagram of the case of target particles crossing a photodetection region while demonstrating Brownian movement.

FIG. 3B is a drawing showing an example of chronological changes in a photon count (light intensity) in the case target particles cross a photodetection region while demonstrating Brownian movement.

FIG. 4A is a model diagram of the case of target particles crossing a photodetection region by moving the location of the photodetection region in a sample solution at a speed faster than the diffusion movement speed of the target particles.

FIG. 4B is a drawing showing an example of chronological changes in photon count (light intensity) in the case target particles cross a photodetection region by moving the location of the photodetection region in a sample solution at a speed faster than the diffusion movement speed of the target particles.

FIG. 5 is a drawing indicating a processing procedure for counting particles based on chronological changes in a photon count measured according to a scanning molecule counting method in the form of a flow chart.

FIG. 6A is a drawing explaining an example of a signal processing step of a detection signal in a processing procedure for counting particles based on chronological changes in a photon count (light intensity) measured by a scanning molecule counting method.

FIG. 6B is a drawing explaining an example of a signal processing step of a detection signal in a processing procedure for counting particles based on chronological changes in a photon count (light intensity) measured by a scanning molecule counting method.

FIG. 7 indicates an example of actual measurements of photon counting data measured by a scanning molecule counting method (bar graph), a curve obtained by smoothing the data (dotted line), and a Gauss function fit to those regions where peaks are present (solid line) (in the drawing, signals indicated as being "noise" are ignored as signals attributable to noise or artifacts).

FIG. 8A is a drawing showing the number of photons counted in each sample solution in Example 1.

FIG. 8B is a drawing showing the number of peaks counted in each sample solution in Example 1.

FIG. 9 is a drawing showing the number of peaks counted in each sample solution in Example 2.

FIG. 10 is a drawing showing the number of peaks counted in each sample solution in Example 3 for each concentration of fluorescent-labeled nucleic acid molecules.

FIG. 11 is a drawing showing the number of peaks counted in each sample solution in Example 4.

## BEST MODE FOR CARRYING OUT THE INVENTION

An explanation is first provided of the scanning molecule counting method. The scanning molecule counting method is a technique for counting luminescent particles, or acquiring information relating to concentration or number density of luminescent particles in a sample solution, by detecting light emitted from the luminescent particles in a microregion and individually detecting each of the luminescent particles in a sample solution when the particles emitting light that disperse and move randomly in a sample solution (referring to the aforementioned "luminescent particles") cross a microregion while scanning the sample solution by microregions. In the scanning molecule counting method, only an extremely small amount (for example, on the order of only several tens of microliters) of sample is required for measurement in the same manner as optical analysis technologies such as FIDA. In addition, in the scanning molecule counting method, measurement time is short, and properties such as concentration or number density can be quantitatively detected for luminescent particles at a lower concentration or number density in comparison with the case of optical analysis technologies such as FIDA.

Furthermore, luminescent particles refer to particles that emit light by fluorescence, phosphorescence, chemiluminescence, bioluminescence or light scattering and the like. In the method used to quantify target particles of the present invention, particles to which target particles and a luminescent probe are bound are luminescent particles.

In the present invention and description of the present application, a "photodetection region" of a confocal microscope or multi-photon microscope refers to a microregion in which light is detected by those microscopes. In the case illumination light is reflected from an object lens, the region where that illumination light is focused corresponds to a microregion. Furthermore, this microregion is defined by the positional relationship between the object lens and pinhole in a confocal microscope in particular.

Light is successively detected while moving the location of the photodetection region in a sample solution, or in other words, while scanning the sample solution by photodetection regions. Whereupon, when the photodetection region being moved contains a luminescent probe bound to or associated with a randomly moving particle, light from the luminescent probe is detected. As a result, the presence of a single particle is detected (although depending on the mode of the experiment, the luminescent probe may also dissociate from the particle desired to be detected (target particle) during detection of light after having bound to that particle desired to be detected). A light signal from the luminescent probe is individually detected in the successively detected light, and as a result thereof, the presence of an individual particle (a particle bound to the luminescent probe) is successively detected, and various information relating to the state of the particle in the solution is acquired. More specifically, in the aforementioned configuration, the number of particles detected during movement of the location of the photodetection region may also be counted, for example, by counting individually detected particles (particle counting). According to the aforementioned configuration, information relating to number density or concentration of particles in a sample solution is obtained by combining the number of particles and the amount of movement of the location of the photodetection region. In particular, particle number density or concentration can be specifically calculated by, for example, moving the location of the photodetection region at a prescribed speed by an arbitrary method, and specifying the total volume of the movement locus of the location of the photodetection region. Naturally, instead of determining absolute values for number density or concentration, relative number density or concentration may also be determined relative to a plurality of sample solutions or reference sample solution having a standard concentration or number density. In addition, in the scanning molecule counting method, a configuration may be employed that allows the location of the photodetection region to be moved by changing the light path of the optical system. Consequently, movement of the photodetection region is rapid, and mechanical vibrations or actions attributable to fluid dynamics do not substantially occur in the sample solution. As a result, light can be measured with the particles targeted for detection in a stable state without being affected by dynamic action. Furthermore, if vibrations or flow act in the sample solution, the physical properties of the particles may change. Since it is also not necessary to provide a configuration that allows a sample solution to flow there through, measurements and analyses can be carried out on an extremely small amount of sample solution (on the order of one to several tens of microliters) in the same manner as in the case of FCS or FIDA and the like.

In the aforementioned step for individually detecting particles, a judgment as to whether or not a luminescent probe bound to a single particle has entered the photodetection region based on successively detected light signals may be carried out based on the form of a detected chronological light signal. Furthermore, in the aforementioned step for individually detecting particles, the case of a single luminescent probe being bound to a single particle, the case of a plurality of luminescent probes being bound to a single particle, and the case of the luminescent probe dissociating from a particle after having bound to a single particle depending on the mode of the experiment, are included. In this example implementation according to the present disclosure, the entry of a luminescent probe bound to a single particle into the photodetection region is typically detected when a light signal has been detected that has intensity greater than a prescribed threshold value.

In addition, in the aforementioned step for moving the location of the photodetection region, the movement speed of the location of the photodetection region in a sample solution may be suitably changed based on the properties of the luminescent probe bound to a particle or the number density or concentration thereof in a sample solution. The mode of light detected from the luminescent probe bound to a particle can be changed according to the properties thereof or the number density or concentration in a sample solution. In particular, the amount of light obtained from a luminescent probe bound to a single particle decreases as the movement speed of the photodetection region increases. Consequently, the movement speed of the photodetection region is preferably suitably changed so that light from the luminescent probe bound to a single particle is measured with favorable accuracy and sensitivity.

Moreover, in the aforementioned step for moving the location of the photodetection region, the movement speed of the location of the photodetection region in a sample solution is preferably set to be faster than the diffusion movement speed (average speed of particles moving by Brownian movement) of the luminescent probe bound to a particle to be detected (luminescent probe bound to a target particle in the method used to quantify target particles of the present invention) . As was previously explained, in the scanning molecule counting method, light emitted from a luminescent probe bound to a single particle is detected when a photodetection region has passed through a location where that luminescent probe is present, thereby resulting in individual detection of the luminescent probe. However, in the case the luminescent probe bound to a particle moves randomly through a solution by Brownian movement and enters and leaves the photodetection region a plurality of times, light signals (light signals indicating the presence of a particle desired to be detected) are detected a plurality of times from a single luminescent probe. Consequently, it becomes difficult to make a detected light signal correspond to the presence of a single particle desired to be detected. Therefore, as was previously described, the movement speed of the photodetection region is set to be faster than the diffusion movement speed of the luminescent probe bound to a particle. More specifically, the movement speed of the photodetection region is set so as to move at a speed faster than the diffusion movement speed of a luminescent probe in a state of being bound to a target particle. As a result, a luminescent probe bound to a single particle can be made to correspond to a single light signal (light signal representing the presence of a particle) . Furthermore, since diffusion movement speed varies according to the luminescent probe bound to a particle, the movement of the photodetection region is preferably suitably changed corresponding to the properties (and particularly, the diffusion constant) of the luminescent probe bound to a particle as previously described.

Changing of the light path of the optical system used to move the location of the photodetection region may be carried out by an arbitrary method.

For example, the location of the photodetection region may be changed by changing the light path using a galvanometer mirror employed in laser scanning optical microscopes. The movement locus of the location of the photodetection region may be set arbitrarily. The movement locus of the location of the photodetection region may be selected from among, for example, a circular, oval, rectangular, linear or curved locus.

In the scanning molecule counting method, the photodetection mechanism per se is composed so as to detect light from a photodetection region of a confocal microscope or multi-photon microscope in the same manner as in the case of optical analysis technologies such as FIDA. Consequently, the amount of sample solution may also be an extremely small amount in the same manner as in the case of optical analysis technologies such as FIDA. However, in the scanning molecule counting method, statistical processing involving calculation of fluctuations in fluorescent intensity and the like is not carried out. Consequently, optical analysis technology employing the scanning molecule counting method can be applied to sample solutions in which the number density or concentration of particles is considerably lower in comparison with that required by conventional optical analysis technologies such as FIDA.

In addition, in the scanning molecule counting method, each particle dispersed or dissolved in a solution is detected individually. Consequently, counting of particles, determination of particle concentration or number density in a sample solution, or acquisition of information relating to concentration or number density, can be carried out quantitatively using that information. Namely, according to the scanning molecule counting method, since particles are detected one at a time by creating a 1:1 correlation between a particle passing through a photodetection region and a detected light signal, particles dispersed and moving randomly in a solution can be counted. Consequently, the concentration or number density of particles in a sample solution can be determined more accurately than in the prior art. In actuality, according to the aforementioned method for detecting a target particle consisting of individually detecting a luminescent probe bound to a target particle and then counting the number thereof to determine particle concentration, the target particles can be detected even if the concentration of a luminescent probe bound to the target particle in a sample solution is lower than the concentration able to be determined based on fluorescence intensity as measured with a fluorescence spectrophotometer or plate reader.

Moreover, according to a mode in which a sample solution is scanned by photodetection regions by changing the light path of the optical system, the inside of the sample solution is observed uniformly or the sample solution is observed in a mechanically stable state without imparting mechanical vibrations or actions attributable to fluid dynamics to the sample solution. Consequently, the reliability of quantitative detection results is improved in comparison with the case of causing the generation of flow in a sample. In addition, measurements can be carried out in a state that does not impart effects caused by dynamic action or artifacts to particles to be detected in a sample solution. Furthermore, in the case of imparting flow to a sample, in addition to it being difficult to impart a uniform flow at all times, the configuration of the device becomes complex. In addition, together with causing a considerable increase in the amount of sample required, the particles in solution, luminescent probe, complex thereof or other substances may undergo deterioration or degeneration due to the fluid dynamic action generated by that flow.

<Configuration of Optical Analysis Device for Scanning Molecule Counting Method>

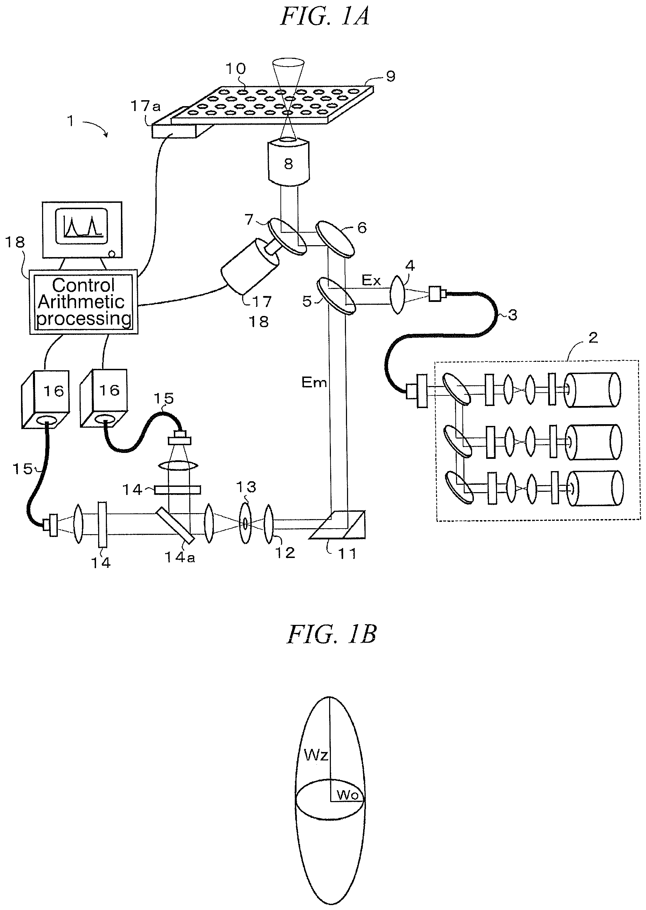

As schematically exemplified in FIG. 1A, the scanning molecule counting method can be realized by an optical analysis device composed by combining the optical system of a confocal microscope capable of performing FCS or FIDA and the like with a photodetector. As shown in FIG. 1A, an optical analysis device 1 is composed of optical system components 2 to 17, and a computer 18 for controlling the operation of each component of the optical systems and acquiring and analyzing data. The optical system of the optical analysis device 1 may be composed in the same manner as the optical system of an ordinary confocal microscope. Laser light (Ex) that has propagated from a light source 2 through a single-mode optic fiber 3 is radiated in the form of light that diverges at an angle determined according to a characteristic NA at the outgoing end of the fiber. The laser light is converted to parallel light by a collimator 4 and is reflected by a dichroic mirror 5 and reflecting mirrors 6 and 7, after which it enters an object lens 8. A microplate 9, in which are arranged sample containers or wells 10 into which are dispensed one to several tens of microliters of a sample solution, is typically arranged above the object lens 8. Laser light emitted from the object lens 8 is focused on the sample solution in the sample containers or wells 10, forming a region of high light intensity. Particles targeted for observation, a luminescent probe that binds to the particles, and typically a molecule having a luminescent label such as a fluorescent dye added thereto, are dispersed or dissolved in the sample solution. When a particle bound to or associated with the luminescent probe (or the luminescent probe may dissociate from the particle after having initially bound thereto depending on the mode of the experiment) enters the excitation region, light excited by the luminescent probe is released during that time. The released light (Em) passes through the object lens 8 and dichroic mirror 5, is reflected by a mirror 11, is concentrated by a condenser lens 12 and then passes through a pinhole 13 followed by passing through a barrier filter 14. At this time, only light components of a specific wavelength band are selected. Moreover, the released light is introduced into a multi-mode optic fiber 15 and reaches a photodetector 16, and after being converted to a chronological electrical signal, is input to the computer 18. Processing for optical analysis is then carried out by a mode to be subsequently explained. Furthermore, in the aforementioned configuration, the pinhole 13 is arranged at a location conjugate to the focal position of the object lens 8. Consequently, only light emitted from the focused region of the laser light as schematically shown in FIG. 1B, namely light emitted from the excitation region, passes through the pinhole 13, while light from a location other than the excitation region is blocked. The focused region of the laser light exemplified in FIG. 1B is a photodetection region in the present optical analysis device having an effective volume of about 1 fL to 10 fL, and is referred to as the confocal volume (and typically has a Gaussian distribution or Lorentzian distribution in which light intensity reaches a peak in the center of the region, and effective volume is the volume of a roughly ellipsoidal shape in which the boundary of light intensity is plane defined as 1/e2). In addition, in the scanning molecule method, light is detected from a complex consisting of a single particle and luminescent probe or light from a luminescent probe, and for example, faint light is detected from one or a plurality of fluorescent dye molecules. Consequently, an ultra-high-sensitivity photodetector capable of use in photon counting is preferably used for the photodetector 16. In addition, although not shown in the drawings, the stage of the microscope may be provided with a stage position adjustment device 17a for moving the position of the microplate 9 in the horizontal direction in order to change the well 10 to be observed. Operation of the stage position adjustment device 17a may be controlled by the computer 18. As a result of employing the aforementioned configuration, measurements can be carried out rapidly even in the case of multiple specimens.

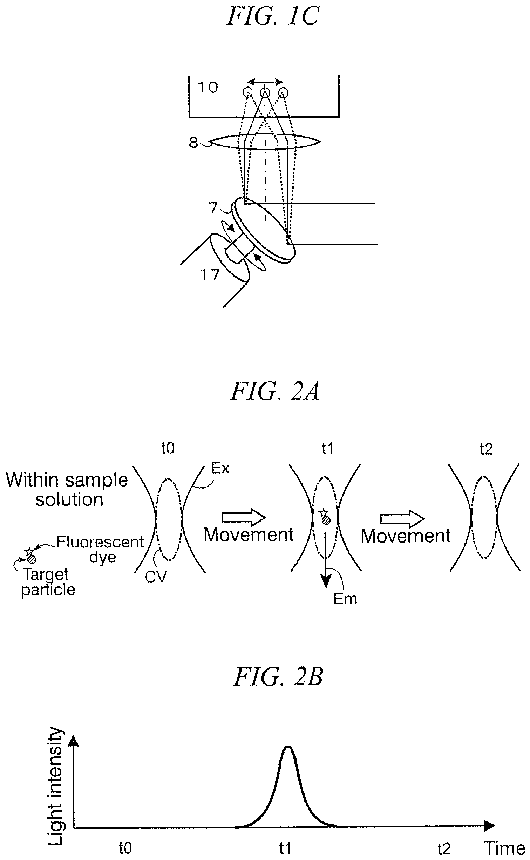

Moreover, in the optical system of the aforementioned optical analysis device, a mechanism is provided for scanning the sample solution by photodetection regions by changing the light path of the optical system, namely a mechanism for moving the location of the focused region (photodetection region) in the sample solution. A mirror light deflector 17 that changes the orientation of the reflecting mirror 7, for example, may be employed as a mechanism for moving the location of the photodetection region in this manner as schematically exemplified in FIG. 1C. This mirror light deflector 17 may be composed in the same manner as a galvanometer mirror device provided in ordinary laser scanning optical microscopes. In addition, the mirror light defector 17 is driven in coordination with light detection by the photodetector 16 under the control of the computer 18 so as to achieve a desired movement pattern of the location of the photodetection region. The movement locus of the location of the photodetection region is arbitrarily selected from among a circular, oval, rectangular, linear and curved locus or a combination thereof. Alternatively, the movement locus of the location of the photodetection region may be selected from various movement patterns programmed in the computer 18. Furthermore, although not shown in the drawings, the location of the photodetection region may be moved in the vertical direction by moving the object lens 8 up and down. As was previously described, the aforementioned optical analysis device is provided with a configuration that moves the location of the photodetection region by changing the light path of the optical system instead of a configuration that moves a sample solution. Consequently, there is no substantial occurrence of mechanical vibrations or actions attributable to fluid dynamics in the sample solution, and the effects of dynamic action on a target can be eliminated, thereby making it possible to carry out stable measurements.

In the case a conjugate of a particle and luminescent probe or a luminescent probe emits light as a result of multi-photon absorption, the aforementioned optical system is used in the form of a multi-photon microscope. In that case, since light is only released in the focused region of the excitation light (photodetection region), the pinhole 13 may be omitted. In addition, in the case a conjugate of a particle and luminescent probe or a luminescent probe emits light by chemiluminescence or bioluminescent phenomena without depending on excitation light, optical system components 2 to 5 for generating excitation light may be omitted. In the case a conjugate of a particle and luminescent probe or a luminescent probe emits light by phosphorescence or light scattering, the aforementioned optical system of a confocal microscope is used as is. Moreover, in the optical analysis device 1, a plurality of excitation light sources 2 are provided as shown in the drawings, and these may be composed so as allow the wavelength of the excitation to be suitably selected according to the wavelength of light that excites a conjugate of a particle and luminescent probe or a luminescent probe. Similarly, in the case a plurality of photodetectors 16 are provided and a plurality of types of conjugates of a particle and luminescent probe or a plurality of luminescent probes having different wavelengths are contained in a sample, the light emitted therefrom may be detected separately according to wavelength.

<Principle of Optical Analysis Technology of Scanning Molecule Counting Method>

In comparison with conventional biochemical analysis technologies, spectral analysis technologies such as FIDA are superior in that they require only an extremely small amount of sample and allow testing to be carried out rapidly. However, in the case of spectral analysis technologies such as FIDA, the concentration and properties of target particles are in principle determined based on fluctuations in fluorescence intensity. Consequently, in order to obtain measurement results of favorable accuracy, the concentration or number density of target particles in a sample solution is required to be of a level such that roughly one target particle is present at all times in a photodetection region CV during measurement of fluorescence intensity, and that significant light intensity (photon count) be detected at all times during the measurement time. If the concentration or number density of the target particles is lower than that level, such as in the case of being at a level such that target particles only occasionally enter the photodetection region CV, significant light intensity (photon count) only appears during a portion of the measurement time, thereby making it difficult to accurately determine fluctuations in light intensity. In addition, in the case the concentration of target particles is considerably lower than the level at which roughly one target particle is present in the photodetection region at all times during measurement, determination of fluctuations in light intensity are subject to the background effects, thereby prolonging measurement time in order to obtain an adequate amount of significant light intensity data for making a determination. In contrast, in the scanning molecule counting method, the concentration, number density or other properties of target particles can be detected even in the case the concentration of target particles is lower than the level required by spectral analysis technologies such as FIDA.

In the optical analysis technology of the scanning molecule counting method, in plain terms, photodetection is carried out by changing the light path by driving a mechanism (mirror light defector 17) for moving the location of the photodetection region while moving the location of the photodetection region in a sample solution, or in other words, while scanning the interior of a sample solution in a sample solution, as is schematically depicted in FIGS. 2A and 2B.

This being the case, as shown in FIGS. 2A and 2B, for example, when the optical analysis device 1 passes a region in which a single particle (a luminescent probe in the form of a fluorescent dye is bound to the particle in FIG. 2A) is present (t1) during the time the photodetection region CV moves (time t0 to t2 in FIG. 2B), significant light intensity (Em) is detected as depicted in FIG. 2B. Thus, movement of the location of the photodetection region CV and photodetection are carried out as described above, and particles bound with a luminescent probe are individually detected as a result of significant light intensity being detected for each particle that appears during that time as exemplified in FIG. 2B. By counting the number of those particles, the number of particles present in a measured region, or information relating to concentration or number density, can be acquired. In this principle of the optical analysis technology of the scanning molecule counting method, individual particles are detected without carrying out statistical arithmetic processing so as to determine fluctuations in fluorescence intensity. Consequently, information relating to particle concentration or number density can be acquired even in a sample solution in which the concentration of particles to be observed is so low that they cannot be analyzed by FIDA and the like with adequate accuracy.

In addition, according to a method by which particles in a sample solution are individually detected and counted as in the scanning molecule counting method, measurements can be carried out at a lower concentration than in the case of measuring the concentration of fluorescent-labeled particles based on fluorescence intensity measured with a fluorescence spectrophotometer or plate reader. In the case of measuring the concentration of fluorescent-labeled particles with a fluorescence spectrophotometer or plate reader, fluorescence intensity is normally assumed to be proportional to the concentration of the fluorescent-labeled particles. In this case, however, if the concentration of the fluorescent-labeled particles becomes low enough, the amount of noise increases relative to the size of the signal generated from light emitted from the fluorescent-labeled particles (resulting in a poor S/N ratio). As a result, the proportional relationship between the concentration of fluorescent-labeled particles and light signal strength is disrupted, and the accuracy of determined concentration values becomes poor. On the other hand, in the scanning molecule counting method, noise signals are removed from the detection results, thereby enabling concentration to be determined by counting only those signals corresponding to individual particles. Consequently, particles can be detected at a lower concentration than that in the case of detecting concentration based on the assumption of fluorescence intensity being proportional to the concentration of fluorescent-labeled particles.

Moreover, in the case a plurality of luminescent probes are bound to a single target particle, according to a method for individually detecting and counting particles in a sample solution in the manner of the scanning molecule counting method, particle concentration measurement accuracy can be improved for high particle concentrations to a greater degree than conventional methods consisting of determining concentration based on the assumption of fluorescence intensity being proportional to the concentration of fluorescent-labeled particles. In the case a plurality of luminescent probes are bound to a single target particle, when a certain amount of luminescent probe is added to the sample solution, the number of luminescent probes that bind to the particles undergoes a relative decrease as the concentration of target particles increases. In this case, since the amount of fluorescence intensity per single target particle decreases, the proportional relationship between the concentration of fluorescent-labeled particles and the amount of light is disrupted, and accuracy of determined concentration values becomes poor. On the other hand, in the scanning molecule counting method, since, in the step for detecting signals corresponding to individual particles from detected light signals, concentration is determined based on the number of particles with little effect of reductions in fluorescence intensity per particle, particles can be detected at higher concentrations than in the case of detecting concentration based on the assumption that fluorescence intensity is proportional to the concentration of fluorescent-labeled particles.

<Measurement of Light Intensity of Sample Solution by Scanning Molecule Counting Method>

Measurement of light intensity in optical analyses using the scanning molecule counting method may also be carried out by a mode similar to the fluorescence intensity measurement step of FCS or FIDA with the exception of moving the location of a photodetection region in a sample solution (scanning the interior of the sample solution) by driving the mirror light deflector 17 during measurement. During operational processing, sample solution is typically injected into the wells 10 of the microplate 9, and after placing the microplate 9 on the microscope stage, a user inputs instructions for starting measurement to the computer 18. Whereupon, the computer 18 initiates radiation of excitation light and measurement of light intensity in a photodetection region in the sample solution in accordance with a program (consisting of a procedure for changing the light path so as to move the location of the photodetection region in the sample solution and a procedure for detecting light from the photodetection region during movement of the location of the photodetection region) stored in a memory device (not shown). During the time this measurement is being carried out, the mirror light deflector 17 drives the mirror 7 (galvanometer mirror) under the control of a processing operation in accordance with the program of the computer 18, and the location of the photodetection region is moved in the wells 10. At the same time, the photodetector 16 converts successively detected light to electrical signals and transmits those signals to the computer 18. In the computer 18, chronological light intensity data is generated from the transmitted light signals and stored therein. Furthermore, the photodetector 16 is typically an ultra-high-sensitivity photodetector capable of detecting the arrival of a single photon. Consequently, light detection is in the form of photon counting that is carried out in a mode in which the number of photons arriving at the photodetector in a prescribed unit time period (bin time), such as every 10 $\mu$s, is successively measured over a prescribed amount of time. In addition, chronological light intensity data is in the form of chronological photon count data.

The movement speed when moving the location of the photodetection region during measurement of light intensity may be an arbitrary speed, and for example, may be a prescribed speed set experimentally or so as to comply with the analysis objective. In the case of acquiring information relating to particle number density or concentration based on the number of target particles detected, the region through which the photodetection region passes is required to have a certain size or volume. Consequently, the location of the photodetection region is moved by a mode that allows movement distance to be determined. Furthermore, since the presence of a proportional relationship between elapsed time during measurement and movement distance of the location of the photodetection region facilitates interpretation of measurement results, movement speed is basically made to preferably be a constant speed. However, movement speed is not limited thereto.

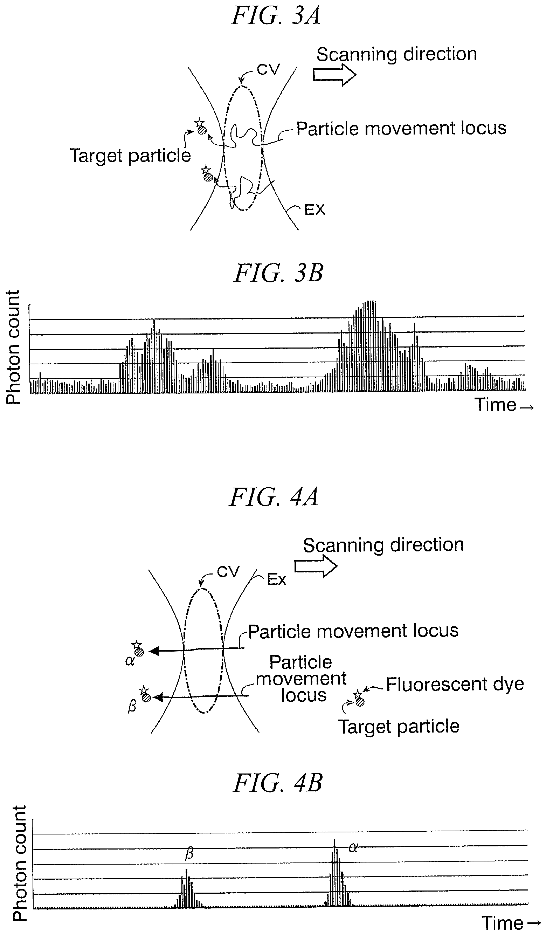

However, with respect to movement speed of the location of the photodetection region, in order to quantitatively detect individual target particles or count the number of target particles based on measured chronological light intensity data with favorable accuracy, the aforementioned movement speed is preferably set to value that is faster than the random movement speed of the target particles (and more precisely, conjugates of particles and luminescent probe or luminescent probe that has degraded and been released after binding with the particles, and in the present embodiment, target particles bound to a luminescent probe), or in other words, a speed faster than movement speed attributable to Brownian movement. Since target particles in an optical analysis technology using the scanning molecule counting method are particles that are dispersed or dissolved in a solution and randomly move about freely therein, their locations based on Brownian movement move over time. Thus, in the case movement speed of the location of the photodetection region is slower than movement attributable to Brownian movement, particles randomly move through the region as schematically depicted in FIG. 3A. Consequently, light intensity changes randomly as depicted in FIG. 3B (and as was previously mentioned, excitation light intensity in a photodetection region has its peak in the center of the region and then decreases moving to either side). As a result, it becomes difficult to specify significant changes in light intensity corresponding to individual target particles. Therefore, the movement speed of the location of the photodetection region is preferably set to be faster than the average movement speed attributable to Brownian movement (diffusion movement speed). Thus, particles cross the photodetection region in nearly a straight line as depicted in FIG. 4A. Consequently, a profile of the change in light intensity corresponding to individual particles becomes nearly uniform as exemplified in FIG. 4B in the chronological light intensity data (in the case particles cross the photodetection region in nearly a straight line, the profile of changes in light intensity is roughly the same as the distribution of excitation light intensity). As a result, the correspondence between the individual target particles and light intensity can be easily determined.

More specifically, a time $\Delta t$ required for a target particle having a diffusion coefficient D (and more precisely, a conjugate of a particle and luminescent probe or a luminescent probe that has been degraded and released after binding with the particle) to pass through a photodetection region (confocal volume) having a diameter Wo by Brownian movement can be determined from the following relational expression of mean square displacement:

$$(2Wo)^2 = 6D \cdot \Delta t \qquad (1)$$

to be

$$\Delta t = (2Wo)^2 / 6D \qquad (2)$$

Consequently, the speed at which the target particles move by Brownian movement (diffusion movement speed) Vdif can generally be expressed as follows:

$$Vdif = 2Wo / \Delta t = 3D / Wo \qquad (3)$$

Therefore, the movement speed during movement of the location of the photodetection region is set to a value that is sufficiently faster than that speed by referring to Vdif. For example, in the case the diffusion coefficient D of a target particle is predicted to be about $2.0 \times 10^{-10}$ m$^2$/s, if Wo is about 0.62 $\mu$m, then Vdif becomes $1.0 \times 10^{-3}$ m/s. Consequently, the movement speed during movement of the location of the photodetection region is set to a value of 15 mm/s, which is about 10 times greater than that. Furthermore, in the case the diffusion coefficient of a target particle is unknown, a preferable movement speed during movement of the location of the photodetection region is determined by repeatedly carrying out preliminary experiments in order to find those conditions under which the prolife of changes in light intensity become the predicted profile (and typically, a prolife that is roughly the same as the excitation light distribution) by trying various settings for the movement speed during movement of the location of the photodetection region.

<Analysis of Light Intensity by Scanning Molecule Counting Method>

Once chronological light intensity data of a sample solution has been obtained according to the aforementioned processing, the computer 18 carries out processing in accordance with a program stored in a memory device (consisting of a procedure for individually detecting light signals corresponding to individual luminescent particles from detected light), and an analysis of light intensity is carried out in the manner described below.

(i) Detection of Single Target particle

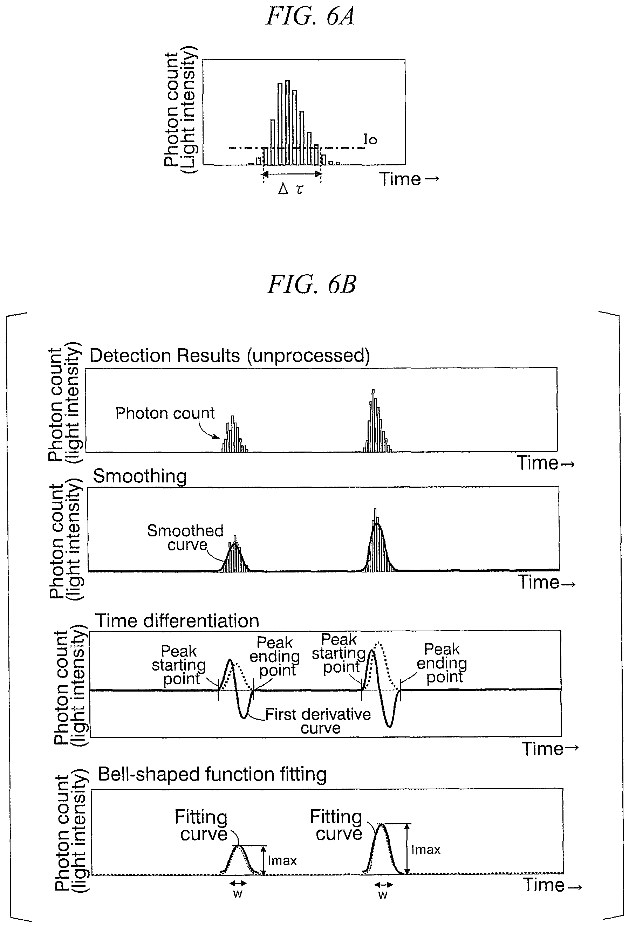

In chronological light intensity data, in the case the locus when a single target particle passes through a photodetection region is roughly linear in the manner shown in FIG. 4A, the change in light intensity corresponding to that particle has a profile that reflects the distribution of light intensity in the photodetection region as schematically depicted in FIG. 6A. Furthermore, this photodetection region is determined by the optical system. A prolife that reflects the distribution of light intensity in a photodetection region normally has a roughly bell-like shape. Therefore, in one technique for detecting target particles, a threshold value Io is set for light intensity, and when a duration $\Delta\tau$ during which light intensity continuously exceeds that threshold value is within a prescribed range, that profile of light intensity is judged to correspond to the passage of a single particle through the photodetection region, and that single target particle is detected. The threshold value Io of light intensity and the prescribed range of duration $\Delta\tau$ are determined based on a profile presumed to be the intensity of light emitted from a conjugate of a target particle and luminescent probe (or a luminescent probe that has been degraded and separated after binding with that particle) that moves at a prescribed speed relative to the photodetection region. Furthermore, specific values may be arbitrarily set experimentally, or may be selectively determined according to the properties of the conjugate of the target particle and luminescent probe (or a luminescent probe that has been degraded and separated from the particle).

In addition, in another technique for detecting target particles, in the case of assuming the distribution of light intensity of a photodetection region to be a Gaussian distribution as indicated below:

$$I = A \cdot \exp(-2t^2/a^2) \qquad\qquad (4)$$

the profile of that light intensity is judged to correspond to the passage of a single target particle through the photodetection region when intensity A and width a as determined by fitting equation (4) to a profile of significant light intensity (profile able to be clearly determined to not be background) are within prescribed ranges, and a single target particle is detected. The profile is ignored during analysis as constituting noise or artifact when intensity A and width a are outside the prescribed ranges.

(ii) Counting of Target particles

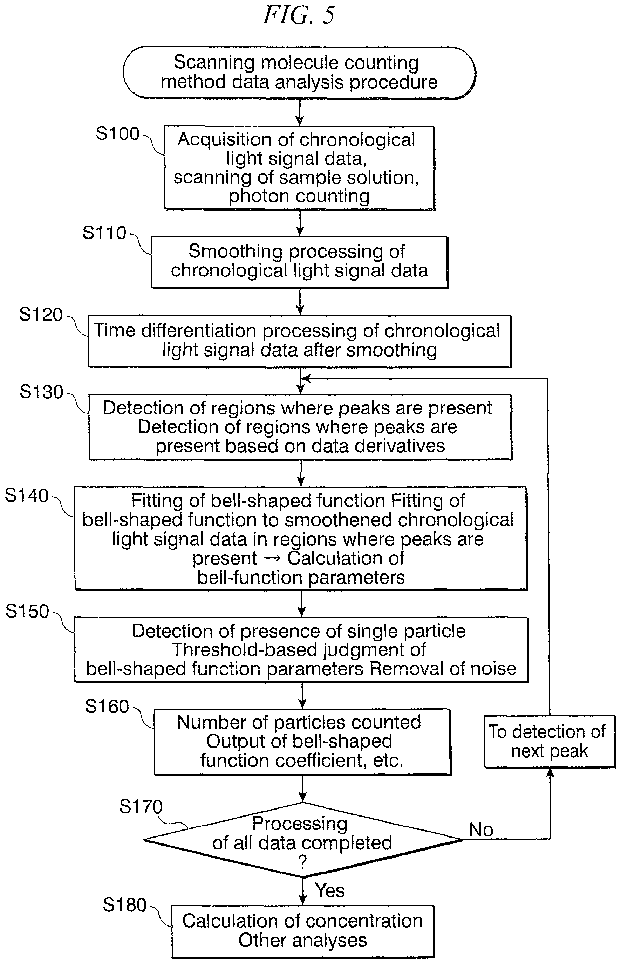

Counting of target particles is carried out by counting the number of particles detected according to the aforementioned techniques for detecting target particles by an arbitrary method. However, in the case of a large number of particles, counting may be carried out according to processing exemplified in FIGS. 5 and 6B.

With reference to FIGS. 5 and 6B, in one example of a method for counting particles from chronological light intensity (photon count) data, after having acquired chronological light signal data (photon count data) by carrying out measurement of light intensity explained above, namely by carrying out scanning of a sample solution by photodetection regions and counting the number of photons (Step 100), smoothing processing (Step 110, "Smoothing" in the second graph from the top in FIG. 6B) is carried out on the chronological light signal data ("Detection result (unprocessed) " in the top graph of FIG. 6B) . Light emitted from conjugates of the particles and luminescent probe or that emitted from the luminescent probe is released statistically, thereby resulting in the possibility of omission of data values for minute time periods. Consequently, this smoothing processing makes it possible to ignore omission of data values as described above. Smoothing processing is carried out by, for example, the moving average method. Furthermore, parameters used when carrying out smoothing processing, such as the number of data points averaged at one time, or the number of times movement is averaged in the case of the moving average method, are suitably set corresponding to the movement speed of the location of the photodetection region when acquiring light intensity data (scanning speed) and bin time.

Next, in order to detect a time region in which a significant signal is present (peak region) in chronological light signal data following smoothing processing, a first derivative is calculated for the time of the chronological light signal data following smoothing processing (Step 120). Since the change in the time derivative of chronological light signal data increases at the inflection point of the signal value as exemplified by "Time differentiation" in the second graph from the bottom in FIG. 6B, the starting point and ending point of a significant signal (peak signal) can be advantageously determined by referring to this time derivative.

Subsequently, significant signals (peak signals) are successively detected in the chronological light signal data, and a judgment is made as to whether or not the detected peak signals are signals corresponding to target particles.

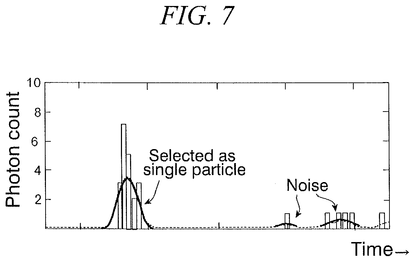

More specifically, a peak region is identified by seeking and determining the starting point and ending point of a single peak signal by successively referring to time derivatives in the chronological time-differentiated data of the chronological light signal data (Step 130). Once a single peak region has been identified, a bell-shaped function is fit to the smoothened chronological light signal data in that peak region (Bell-shaped function fitting" in the bottom graph of FIG. 6B), and parameters such as peak intensity Imax of the bell-shaped function, peak width (half width at maximum) w and correlation coefficient (of the least squares method) during fitting are calculated (Step 140). Furthermore, although the bell-shaped function subjected to fitting is typically a Gaussian function, it may also be a Lorentzian function. A judgment is then made as to whether or not the calculated bell-shaped function parameters are within a presumed range for the parameters of a bell-shaped profile depicted by a light signal detected when a single conjugate of a particle and luminescent probe or luminescent probe has passed through a photodetection region, namely whether or not peak intensity, peak width and correlation coefficient are each within a prescribed range (Step 150). Thus, in the case of a signal for which calculated bell-shaped function parameters have been judged to be within the presumed range for a light signal corresponding to a single conjugate of a particle and luminescent probe or luminescent probe as indicated on the left side of the graph of FIG. 7, that signal is judged to be a signal corresponding to a single target particle. As a result, a single target particle is judged to have been detected and that target particle is counted as a single particle (and the particle count is incremented by 1, Step 160). On the other hand, in the case of peak signals in which the calculated bell-shaped function parameters are not within the presumed range as indicated on the right side of the graph of FIG. 7, those signals are ignored as constituting noise.

The searching and discrimination of peak signals in the aforementioned processing of steps 130 to 160 are carried out repeatedly for the entire range of chronological light signal data. Each time a single target particle is detected, that target particle is counted as a particle. When searching for peak signals throughout the entire range of chronological light signal data has been completed (Step 170), the particle count value obtained up to that time is taken to be the number of target particles detected in the chronological light signal data.

(iii) Determination of Number Density and Concentration of Target particles

When target particles are counted, the number density or concentration of the target particles is determined using the total volume of the photodetection region traversed by the target particles during acquisition of chronological light signal data. However, the effective volume of the photodetection region fluctuates dependent upon the wavelength of the excitation light or detection light, numerical aperture of the lens, and adjusted state of the optical system. Consequently, it is generally difficult to determine the number density or concentration of target particles from design values. Thus, it is not easy to determine the total volume of the traversed region of a photodetection region. Therefore, light intensity is typically measured and particles are detected and counted as previously explained for a solution having a known particle concentration (reference solution) under the same conditions as those used when measuring a sample solution to be tested, and the total volume of the traversed photodetection region, namely the relationship between the detected number and concentration of target particles, is determined from the number of detected particles and the particle concentration of the reference solution.

The particles of the reference solution preferably consist of a fluorescent label (such as a fluorescent dye) having optical properties similar to conjugates of particles and luminescent probe formed by the target particles (or luminescent probe that has separated after binding with the target particles). More specifically, when assuming a number of detected particles N for a reference solution having a particle concentration C, for example, then the total volume $V_t$ of the traversed region of the photodetection region is given by the following equation:

$$V_t = N/C \qquad (5)$$

In addition, a plurality of solutions having different concentrations may be provided for use as reference solutions, measurements may be carried out on each reference solution, and the average value of the calculated $V_t$ of each may be used as the total volume $V_t$ of the traversed region of the photodetection region. If $V_t$ is given, then the number density c of particles in a solution for which the result of particle counting is n is given by the following equation:

$$c = n/V_t \qquad (6)$$

Furthermore, determination of the volume of a photodetection region and the total volume of the traversed photodetection region is not limited to the aforementioned method, but rather may also be obtained by an arbitrary method such as FCS or FIDA. In addition, the optical analysis device of the present example implementation may preliminarily store information on the relationship between concentration C and particle count N (Equation (5)) for various standard particles and for presumed photodetection region movement patterns in a memory device of the computer 18, and may be configured so that a device user is able to use that suitably stored relationship information when performing optical analyses.

<Target Particle Detection Method>

The scanning molecule counting method is a measurement method that enables luminescent particles to be measured one particle at a time while molecules are in a discrete state. Consequently, measurements can be carried out on luminescent particles at a comparatively low concentration on the pM order or lower. Consequently, even in cases in which the concentration of target particles to be analyzed in a sample solution is extremely low, the aforementioned method for detecting target particles can be used to count target particles bound to a luminescent probe with high sensitivity.

On the other hand, in addition to the scanning molecule counting method carrying out detection by capturing a signal from a luminescent particle in a confocal region being tested (namely, a photodetection region), detection is carried out in a solution in which the luminescent particle targeted for detection is present in a discrete state. Consequently, there are cases in which considerable time is required until a luminescent particle is captured in the photodetection region. In the case of detecting extremely scarce luminescent particles in particular, it may be necessary to continue measurement until an adequate signal is captured in the aforementioned photodetection region. In cases of a short measurement time, it is difficult to accurately measure only luminescent particles since the frequency at which signals are acquired from luminescent particles targeted for analysis is insufficient. In other words, measurement time in the scanning molecule counting method is dependent upon the concentration of the measurement target, and measurement time becomes long in cases of measuring sample solutions in which luminescent particles are extremely sparse.

The aforementioned method for detecting target particles is a method for detecting target particles dispersed and moving randomly in a sample solution. In the aforementioned method for detecting target particles, by labeling the target particles in a sample solution by binding to a luminescent probe, and further counting the target particles bound to the luminescent probe by the scanning molecule counting method, the concentration of target particles in the sample solution can be further enhanced by concentration treatment when detecting the target particles in the sample solution. According to the aforementioned method for detecting target particles, since concentration of target particles in a sample solution is enhanced by concentration treatment prior to measuring according to the scanning molecule counting method, target particles can be detected in a shorter measurement time.

Concentration treatment for enhancing the concentration of target particles in a sample solution may be carried out at any time provided it is carried out prior to measurement according to the scanning molecule counting method. More specifically, concentration treatment may be carried out on a sample solution prior to preparation of the sample solution by mixing with a luminescent probe, or concentration treatment may be carried out on the sample solution following its preparation.

More specifically, the method for detecting a target particle of a first aspect of the present disclosure (to be referred to as the first detection method) is a method for detecting a particle dispersed and moving randomly in a sample solution, and has the following steps (a) to (c):

(a) a step for concentrating a test sample so as to enhance the concentration of target particles in the test sample,
(b) a step for preparing a sample solution containing the test sample concentrated in step (a) and a luminescent probe that binds to the target particle, and allowing the target particle and the luminescent probe to bind in the sample solution, and (c) a step for counting the number of target particles bound to the luminescent probe present in the sample solution prepared in step (b).

In addition, the luminescence properties of the released light differ between the state in which the luminescent probe is bound to the target particle and the state in which the luminescent probe is present alone.

In the present embodiment, "particles dispersed and moving randomly in a sample solution" refer to particles such as atoms, molecules or aggregates thereof dispersed or dissolved in a sample solution (and may be particles that emit light or particles that do not emit light) that move about freely by Brownian movement in a solution without being immobilized on a substrate and the like.

The target particles refer to particles that are dispersed and moving randomly in a sample solution and are used to quantitatively determine the concentration thereof in the sample solution. Examples of target particles include biomolecules such as proteins, peptides, nucleic acids, nucleic acid-like substances, lipids, saccharides, amino acids or aggregates thereof, particulate biological targets such as viruses or cells, and non-biological particles (such as atoms, molecules, micelles or metal colloids). Nucleic acids may be DNA or RNA, or may be artificially amplified substances in the manner of cDNA.

Examples of nucleic acid-like substances include substances in which side chains and the like of naturally-occurring nucleotides in the manner of DNA or RNA (nucleotides present in nature) have been modified by functional groups such as an amino group, and substances that have been labeled with a protein or low molecular weight compound and the like. Specific examples of nucleic acid-like substances include bridged nucleic acids (BNA), nucleotides in which an oxygen atom at position 4' of a naturally-occurring nucleotide has been substituted with a sulfur atom, nucleotides in which a hydroxyl group at position 2' of a naturally-occurring nucleotide has been substituted with a methoxy group, hexitol nucleic acids (HNA) and peptide nucleic acids (PNA).

A luminescent probe used in the present embodiment is a substance that specifically or non-specifically binds or adsorbs to a target particle, and there are no particular limitations thereon provided the luminescence properties of the released light differ between the state in which it is bound to a target particle and the state in which it is present alone. For example, the luminescent probe may be a substance in which a fluorescent substance is bound to a substance that specifically or non-specifically binds or absorbs to a target particle. Although the luminescent substance is typically a fluorescent substance, it may also be a substance that emits light by phosphorescence, chemiluminescence, bioluminescence or light scattering. There are no particular limitations on the fluorescent substance provided it is a substance that releases fluorescence as a result of being irradiated with light of a specific wavelength, and can be used by suitably selecting from among fluorescent dyes used in FCS or FIDA and the like.

For example, in the case the target particle is a nucleic acid or nucleic acid-like substance, examples of the luminescent probe include a substance in which a luminescent substance such as a fluorescent substance is bound to an oligonucleotide that hybridizes with the target particle, a nucleic acid-binding substance bound with luminescent substance such as a fluorescent substance, and a dye molecule that binds to nucleic acid. The oligonucleotide may be DNA, RNA or an artificially amplified substance in the manner of cDNA, or a substance that contains a portion or all of a nucleic acid-like substance capable of forming a nucleotide chain and base pairs in the same manner as naturally-occurring nucleic acid bases. In addition, in the case the target particle is a protein, a substance in which an antigen or antibody to the target particle or a ligand or receptor for the target particle is labeled with a luminescent substance such as a fluorescent substance, can be used as a luminescent probe. Furthermore, binding of a luminescent substance to a substance that specifically or non-specifically binds or absorbs to a target particle such as a nucleic acid or protein can be carried out by ordinary methods.

The luminescent probe used in the present embodiment may be a substance that non-specifically binds to a target particle. From the viewpoint of accuracy of detection and quantitative determination of target particles, a substance that binds specifically is preferable. Furthermore, the luminescent probe that specifically binds to a target particle is only required to be a substance that preferentially binds to the target particle rather than binding to other substances having physical or chemical properties similar to those of the target particle, and is not required to be a substance that does not bind at all to substances other than the target particle. For example, in the case the target particle is a nucleic acid, an oligonucleotide labeled with a luminescent substance used as a luminescent probe may have a base sequence that is completely complementary to the base sequence of the target particle, or may have a base sequence that contains mismatches with the base sequence of the target particle.

In addition, the luminescence properties of released light of the luminescent probe differing between the state in which the luminescent probe is bound to a target particle and the state in which the luminescent probe is present alone means that the intensity of light of a specific wavelength differs between the state in which the luminescent probe is bound to the target particle and the state in which the luminescent probe is present alone. As a result of making the intensity of light of a specific wavelength to be different between the state in which the luminescent probe is present alone and the state in which the luminescent probe is bound to a target particle (such as by causing fluorescence intensity to differ), both states can be distinguished and detected in the scanning molecule counting method.

In the case the target particle is a protein, a dye (such as a fluorescent dye in the manner of hydrophobic probes ANS, MANS and TNS) can be used as a luminescent probe that undergoes a change in fluorescence intensity or fluorescence wavelength due to a change in the ambient environment as a result of binding with the protein. In addition, the luminescent probe per se is not necessarily required to emit light. For example, in the case the target particle is a nucleic acid or nucleic acid-like substance, by using an oligonucleotide that hybridizes with the target particle as a luminescent probe, even if a fluorescent double-stranded nucleic acid-like substance is added that specifically binds to a double-stranded structure, luminescence properties can be made to differ between the state in which the luminescent probe is present alone and the state in which the luminescent probe is bound to the target particle. Examples of fluorescent double-stranded nucleic acid-like substances that specifically bind to a double-stranded structure include fluorescent intercalators and groove binders bound to a fluorescent substance.

In addition, substances composed of at least two constituents that emit fluorescence due a mutual positional change in at least one of the aforementioned constituents, for example, may also be employed as luminescent probes. Examples of such substances include fluorescent proteins that undergo a structural change and release strong fluorescence when binding to a certain particle, and molecules that form a fluorescent metal complex when binding to a certain molecule (complex ligands). According to this type of configuration, since a luminescent probe alone or a luminescent probe that does not bind to a target particle either does not emit hardly any light, or even if it emits light, since the wavelength differs from that of a conjugate of the target particle and luminescent probe, light from the conjugate of the target particle and luminescent probe can be detected selectively.

In addition, the luminescence properties can also be made to differ between a luminescent probe present alone in a sample solution and a luminescent probe in a state of being bound to a target particle by using fluorescence resonance energy transfer (FRET) . For example, a substance serving as an energy donor in FRET and a substance serving as an energy acceptor can be used as substances that bind to a target particle, and a substance for which FRET occurs in a state in which a luminescent probe is present alone but for which FRET is not allowed to occur in the state of being bound to the target particle can be used as a luminescent probe. Since FRET does not occur from the luminescent probe bound to the target particle, fluorescence is released from the fluorescent substance serving as the energy donor. On the other hand, fluorescence released from the fluorescent substance serving as the energy donor is either not detected from the fluorescent probe present alone or that fluorescence is weak. Therefore, by detecting fluorescence released from the fluorescent substance serving as the energy donor, a target particle bound to the luminescent probe can be distinguished from the luminescent probe present alone and thereby detected.

For example, in the case the target particle is a nucleic acid or nucleic acid-like substance, a molecular beacon probe in which a fluorescent substance serving as an energy donor and a substance serving as an energy acceptor in FRET are bound to oligonucleotides that form an intramolecular structure when in the state of a single-stranded nucleic acid such that FRET occurs when in the state of a single-stranded nucleic acid molecule, but does not occur when in the state of an association product formed by hybridizing with another single-stranded nucleic acid molecule, can be preferably used as a luminescent probe. In the present embodiment, a substance is preferably used that has a fluorescent substance serving as an energy donor or a substance serving as an energy acceptor bound to the 3'-terminal side with the remaining other of the pair bound to the 5'-terminal side, has base sequences that are mutually complementary to the region of 5'-terminal side and 3'-terminal side, and forms an intramolecular structure (a so-called stem-loop structure) by forming base pairs in these base sequences. Furthermore, the mutually complementary regions that form the intramolecular base pairs of the molecular beacon probe are present so as to interpose a region that hybridizes with a target particle. Consequently, the region on the 3'-terminal side and the region on the 5'-terminal side may be regions that respectively contain the 3'-terminal or 5'-terminal or regions that do not. In addition, the number of bases and base sequence of the regions that form the base pairs are preferably to such a degree that the stability of the formed base pairs is lower than the stability of the association product with the target particle, and base pairs can be formed under the measurement conditions.

In addition, a luminescent probe present alone can also be distinguished from a luminescent probe bound to a target particle by using a fluorescent double-stranded nucleic acid-binding substance that specifically binds to a double- stranded structure and inducing FRET between the fluorescent double-stranded nucleic acid-binding substance and a fluorescent substance labeled with the luminescent probe. Namely, one of either a fluorescent double-stranded nucleic acid-binding substance or a fluorescent substance labeled with the luminescent probe serves as an FRET energy donor while the other serves as an FRET energy acceptor. Fluorescence released from the fluorescent substance labeled with the luminescent probe is detected from the luminescent probe present alone. In contrast, since the fluorescent double- stranded nucleic acid-binding substance binds to the luminescent probe bound to a target particle, fluorescent released by FRET is detected from the conjugate thereof. As a result, the conjugate can be distinguished from the luminescent probe present alone, thereby enabling its detection.

Furthermore, in the case the amount of fluorescent intercalator inserted between the base pairs of the association product of the luminescent probe and target particle is excessively large, the background level when detecting fluorescence released by FRET becomes excessively high, potentially having an effect on detection accuracy. Consequently, the luminescent probe is preferably designed so that the region that forms a double-strand in the association product of the luminescent probe and target particle is 400 bp or less.

In addition, two types of luminescent probes may also be used in the present example implementation. For example, in the case the target particle is a nucleic acid or nucleic acid-like substance, two types of luminescent probes are designed to as to hybridize mutually adjacent to a target particle, one of the luminescent probes is labeled with a fluorescent substance serving as an energy donor in FRET, while the other luminescent probe is labeled with a substance serving as an energy acceptor in FRET. In this case, although FRET does not occur in the case the luminescent probe is present alone, as a result of binding to the target particle, the two types of luminescent probes are mutually brought into close proximity thereby resulting in the occurrence of FRET. Consequently, the target particle bound to the luminescent probe can be detected by detecting fluorescence released by FRET.

In addition, there are no particular limitations on the test sample used in the present embodiment provided it is a sample that is expected to contain a target particle, and may be a biological sample or artificially prepared sample. In the case the target particle is a nucleic acid molecule, examples of the test sample include cells, tissue, a solution obtained by solubilizing, cells, tissue or bacteria and dispersing nucleic acid components in a liquid, and a solution containing nucleic acid components amplified by PCR.

The following provides an explanation of each step.

First, in step (a), a test sample is concentrated so as to enhance the concentration of target particles in the test sample. There are no particular limitations on the concentration method, and a known chemical or molecular biological technique and the like used when concentrating, isolating or purifying substances similar to the target particles can be suitably used. For example, the concentration of target particles may be enhanced by only removing a solvent from a test sample by a method in which the solvent is evaporated or transpired by warming or heating under reduced pressure, or a method in which the solvent is removed by ultracentrifugation. In addition, a concentrated test sample can be prepared by isolating and purifying only target particles from a test sample or isolating and purifying target particles together with a substance that approximates the physical or chemical properties of the target particles, followed by dissolving or dispersing in a suitable solvent in an amount smaller than the amount of the test sample prior to isolation and purification. Although there are no particular limitations on the solvent used to dissolve or disperse the isolated and purified target particles, a solvent is preferable that does not inhibit detection of a luminescent probe bound to the target particles by the scanning molecule counting method. Examples of this solvent include water and phosphate buffers or Tris buffers such as phosphate-buffered saline (PBS, pH 7.4).

In the scanning molecule counting method, in the case various substances including a substance having intrinsic fluorescence are contained in a measurement solution, such factors as the generation of non-specific signals or inhibition of the light path through which the light passes can impair measurement. Consequently, in the present embodiment, rather than concentrating by simply removing the solvent, the target particles are preferably concentrated by isolating and purifying only target particles from the test sample or isolating and purifying the target particles together with a substance that approximates the physical or chemical properties of the target particles.

In the case the target particles are nucleic acid molecules, a concentrated test sample can be prepared by selectively recovering only the nucleic acid molecules from the test sample and dissolving the recovered nucleic acid molecules in a suitable solvent. There are no particular limitations on the method used to selectively recover nucleic acid molecules from the test sample, and can be suitably selected and used from among known nucleic acid purification methods. For example, nucleic acid molecules may be selectively precipitated by ethanol precipitation, and the resulting precipitate may be dissolved in a suitable solvent such as water. In addition, by contacting the test sample with an inorganic support, nucleic acid molecules in the test sample may be adsorbed to the inorganic support followed by eluting the adsorbed nucleic acid molecules from the inorganic support.

A known inorganic support capable of adsorbing nucleic acid molecules can be used for the aforementioned inorganic support. In addition, there are no particular limitations on the form of the inorganic support, and may in the form of particles or a film. Examples of inorganic supports include silica-containing particles (beads) such as silica gel, siliceous oxides, glass or diatomaceous earth, and porous films such as nylon, polycarbonate, polyacrylate or nitrocellulose films. Moreover, in the case of using polymer-coated magnetic particles such as ferrite or other metal particles having polystyrene coated on the surface thereof, nucleic acid molecules can be adsorbed by chemically modifying the surface of the magnetic particles. A solvent normally used to elute nucleic acid molecules from these known inorganic supports can be suitably used for the solvent used to elute adsorbed nucleic acid molecules from an inorganic support. Purified water is particularly preferable for this elution solvent. Furthermore, nucleic acid molecules are preferably eluted from the inorganic support after having washing the inorganic support having nucleic acid molecules adsorbed thereto using a suitable wash buffer.

A test sample in which nucleic acid molecules have been concentrated can also be prepared by removing molecules other than nucleic acid molecules, such as protein, from the test sample. For example, by adding one type or two or more types of compounds ordinarily used as protein or other denaturing agents, such as a chaotropic salt, organic solvent or surfactant, to a test sample to denature the protein in the test sample followed by subjecting to centrifugal separation treatment, the protein can be removed from the test sample by precipitating the denatured protein and recovering only the supernatant. A concentrated test sample can also be prepared by recovering nucleic acid from the resulting supernatant using the aforementioned inorganic support. In the case the amount of recovered supernatant is less than the amount of test sample prior to adding the protein denaturing agent, the supernatant may be used as is for the concentrated test sample.

Examples of chaotropic salts used as protein denaturing agents include guanidine hydrochloride, guanidine isothiocyanate, sodium iodide, sodium perchlorate and sodium trichloroacetate. The surfactant used as protein denaturing agent may be a nonionic surfactant, anionic surfactant or cationic surfactant. Examples of nonionic surfactants include Tween 80, 3-[(3-Cholamidopropyl)dimethylammonio]-1-propanesulfonate (CHAPS), Triton X-100 and Tween 20. Examples of anionic surfactants include sodium alkyl sulfonates as represented by sodium dodecyl sulfonate (SDS), sodium cholate and N-laurylsarcosine. Examples of cationic surfactants include alkyl quaternary ammonium salts as represented by CDAB. Phenol is preferable as an organic solvent used as a protein denaturing agent. The phenol may be neutral or acidic. In the case of using acidic phenol, RNA can be more selectively extracted into an aqueous phase than DNA.

In addition, a test sample in which nucleic acid molecules have been concentrated can also be prepared by aggregating protein in the test sample using a protein removal agent followed by recovering the liquid component by solid-liquid separation treatment. More specifically, after adding a protein removal agent to a test sample, the protein is aggregated by stirring or allowing to stand undisturbed, followed by recovering the supernatant by centrifugal separation treatment.

A substance having high affinity for protein, such as an ion exchange resin, can be used for the protein removal agent.

In addition, the concentration of step (a) can also be carried out by specifically recovering target particles from a test sample. For example, target particles can be recovered from a test sample by using a common chemical or molecular biological technique in the manner of gel filtration, ultracentrifugation, HPLC or electrophoresis. In addition, target particles can be specifically recovered by contacting a test sample with a carrier loaded with a substance that specifically binds with the target particles to bind the target particles in the test sample to the carrier, followed by releasing the target particles from the carrier. A concentrated test sample can then be prepared by dissolving or dispersing the target particles following their release in a suitable solvent that is less than the original amount of the test sample. In the case the target particle is a nucleic acid molecule, for example, examples of substances that specifically bind with the target particle include oligonucleotides that hybridize with the target particle. In addition, in the case the target particle is a protein, examples of substances that specifically bind with the target particle include molecules that are in a relationship with the target particle of an antigen and antibody or in the relationship of a ligand and receptor.

The concentration of the target particles in the concentrated test sample prepared in step (a) is only required to be higher than the concentration of target particles in the test sample prior to concentration. A sample solution having a higher concentration of target particles can be prepared in the subsequent step (b) by preliminarily concentrating the test sample. As was previously described, the time required for measurement in the scanning molecule counting method is dependent on the concentration of target particles in the sample solution used for measurement. In other words, in a first detection method, measurement can be carried out in a shorter amount of time than in the case of not concentrating the test sample in advance.

Next, in step (b), a sample solution is prepared that contains the test sample concentrated in step (a) and a luminescent probe that binds to the aforementioned target particles, and the aforementioned target particles and luminescent probe are allowed to bind in this sample solution. More specifically, a luminescent probe is first added to the concentrated test sample to prepare a sample solution. At this time, a suitable solvent may be further added as necessary. There are no particular limitations on this solvent provided it does not inhibit detection of light released from the luminescent probe bound to the target particles by the scanning molecule counting method, and can be suitably selected from among buffers commonly used in this technical field.

Examples of these buffers include phosphate buffers and Tris buffers such as phosphate-buffered saline (PBS, pH 7.4).

There are no particular limitations on the concentration or number density of the target particles in the sample solution of step (c). The concentration of target particles in the sample solution is preferably high from the viewpoint of shortening measurement time of the scanning molecule counting method. However, if the concentration is excessively high, there is conversely the possibility of a decrease in measurement accuracy. Consequently, the sample solution is preferably prepared in step (b) so that the number density of the target particles in the sample solution is 1 molecule or less per volume ($V_d$) of the aforementioned photodetection region. For example, the concentration $X_T(M)$ of the target particles in the sample solution preferably satisfies the relationship of $X_T \cdot N_A \cdot V_d \leq 1$ (where, $N_A$ represents Avogadro's constant). In addition, in order to sufficiently shorten measurement time, concentration $X_T(M)$ of the target particles in the sample solution preferably satisfies the relationship of $1 \times 10^{-4} \leq X_T \cdot N_A \cdot V_d \leq 1$. For example, in the case $V_d$ is 1 fL, then concentration $X_T$ of the target particles in the sample solution is preferably on the pM order.

In the case of being able to bind the target particles and luminescent probe by only having them present in the same solution, after having prepared the sample solution, the target particles and luminescent probe can be bound in the sample solution simply by incubating the sample solution for a prescribed amount of time as necessary.

On the other hand, in the case the target particle or luminescent probe is a nucleic acid molecule or nucleic acid-like substance having a double-stranded structure, the target particle and luminescent probe are preferably associated after having denatured the nucleic acid and the like in the sample solution. Furthermore, "denaturing a nucleic acid molecule or nucleic acid-like substance" refers to dissociation of base pairs. For example, this refers to dissociating base pairs formed by mutually complementary base sequences in a molecular beacon probe to disassemble an intramolecular structure and form a single-stranded structure, or converting a double-stranded nucleic acid molecule into a single-stranded nucleic acid molecule. Furthermore, in the case the luminescent probe is an oligonucleotide containing a nucleic acid-like substance such as PNA, there are cases in which an association product consisting of the luminescent probe and target particle can be formed without having to carry out a special denaturation treatment even if the target particle was in the form of a double-stranded nucleic acid molecule.

Examples of denaturation treatment include denaturation by high-temperature treatment (heat denaturation) and denaturation by low salt concentration treatment. In particular, heat denaturation is preferable since the effect on a fluorescent substance or other luminescent substance is comparatively low and the procedure is simple. More specifically, in the case of heat denaturation, nucleic acid molecules and the like in a sample solution are denatured by subjecting the sample solution to high-temperature treatment. In general, although denaturation can be carried out by holding at a temperature of 90°C for DNA or 70°C for RNA for several seconds to about 2 minutes, since the denaturing temperature varies according to the base length of the target particle and the like, the temperature is not limited thereto provided denaturation is possible at that temperature. On the other hand, denaturation by low salt concentration treatment can be carried out by, for example, adjusting the salt concentration of a sample solution to be sufficiently low by diluting with purified water and the like.

After having carried out denaturation as necessary, the target particles and luminescent probe in the aforementioned sample solution are associated.

In the case of having carried out heat denaturation, the target particles and luminescent probe in the sample solution can be suitably associated by lowering the temperature of the sample solution to a temperature that allows specific hybridization between the target particles and luminescent probe. In addition, in the case of having carried out denaturation by low salt concentration treatment, the target particles and luminescent probe in the sample solution can be suitably associated by raising the salt concentration of the sample solution to a concentration that allows specific hybridization between the target particles and luminescent probe.

Furthermore, the temperature at which two single-stranded nucleic acid molecules are able to specifically hybridize can be determined from a melting curve of an association product of the target particle and luminescent probe. A melting curve can be determined by, for example, changing the temperature of a solution containing only the target particle and luminescent probe from a high temperature to a low temperature, and measuring optical absorbance or fluorescence intensity of the solution. The temperature range from the temperature at which the two denatured single-stranded nucleic acid molecules begin to form an association product to the temperature at which the nucleic acid molecules have nearly completely formed an association product can be taken to be the temperature at which both specifically hybridize as determined from the melting curve. The concentration at which two single-stranded nucleic acid molecules specifically hybridize can be determined by similarly determining a melting curve by changing the salt concentration in the solution from a low concentration to a high concentration instead of changing the temperature.

The temperature at which two single-stranded nucleic acid molecules specifically hybridize can generally be substituted for the Tm value (melting temperature). For example, the Tm value of a region of a luminescent probe that hybridizes with a target particle (temperature at which 50% of double-stranded DNA dissociates to single-stranded DNA) can be calculated from base sequence information of the luminescent probe by using commonly used primer/probe design software and the like.

In addition, in order to suppress non-specific hybridization, the temperature of the sample solution is preferably lowered comparatively slowly when forming an association product. For example, after having denatured a nucleic acid molecule by making the temperature of a sample solution to be 70°C or higher, the liquid temperature of the sample solution can be lowered at a temperature lowering rate of 0.05°C/second or slower.

In addition, in order to suppress non-specific hybridization, a surfactant, formamide, dimethylsulfoxide or urea and the like is preferably added to the reaction solution in advance. Only one type of these compounds may be added or two or more types may be added in combination. The addition of these compounds makes it possible to prevent the occurrence of non-specific hybridization in a comparatively low temperature environment.

Subsequently, in step (c), the number of target particles that have bound with the luminescent probe in the prepared sample solution is counted by the scanning molecule counting method. More specifically, a sample solution following binding between a target molecule and luminescent probe is placed in the aforementioned optical analysis device for use with the scanning molecule counting method. By detecting and analyzing light released from the luminescent probe when bound with the target particle using the aforementioned procedure, the number of target particles that have bound to the luminescent probe can be counted. The counted number of target particles is the number of target particles contained in the measurement solution.

In addition, in the method for detecting target particles of the present embodiment, effects similar to those of the first detection method are obtained even if the concentration of target particles in a sample solution is enhanced by carrying out concentration treatment on the sample solution after having prepared the sample solution containing a test sample and a luminescent probe.

More specifically, a method for detecting target particles of a second aspect of the present disclosure (to be referred to as the second detection method) is a method for detecting target particles dispersed and moving randomly in a sample solution, having the following steps (a') to (c'). Moreover, in the method for detecting particles of the second aspect of the present disclosure, concentration treatment is carried out after step (a') or after step (b') so as to enhance the concentration of the target particles in a sample solution:

(a') a step for preparing a sample solution containing a test sample and a luminescent probe that binds to target particles,
(b') a step for binding the target particles and the luminescent probe in the sample solution prepared in step (a'), and
(c') a step for counting the number of target particles bound to the luminescent probe present in the sample solution prepared in step (b').

Step (a') and step (b') can be carried out in the same manner as the aforementioned step (b). In addition, step (c') can be carried out in the same manner as the aforementioned step (c) .

There are no particular limitations on concentration treatment carried out after step (a') provided it does not inhibit binding between the target particles and luminescent probe subsequently carried out in step (b'), and can be suitably selected and used from among commonly known chemical or molecular biological techniques used when concentrating, isolating or purifying substances similar to the target particles. There are also no particular limitations on concentration treatment carried out after step (b') provided it is a concentration treatment that does not impair or reduce the conjugate of the target particle and luminescent probe formed in step (b'), and can be suitably selected and used from among commonly known chemical or molecular biological techniques used when concentrating, isolating or purifying substances similar to the target particles.

More specifically, the concentration of the target particles may be enhanced by removing only the solvent from the test sample by, for example, a method in which a solvent is evaporated or transpired by warming or heating under reduced pressure, or a method in which the solvent is removed by ultracentrifugation. In addition, after having isolated and purified the target particles and luminescent probe from a test sample alone or after having isolated and purified the target particles and luminescent probe together with a substance having similar physical or chemical properties, a concentrated sample solution can be prepared by dissolving or dispersing in a suitable solvent in an amount smaller than the amount of the test sample prior to isolation and purification.

In the case the target particle or luminescent probe is a nucleic acid molecule, concentration treatment carried out after step (a') or after step (b') can be carried out in the same manner as the concentration treatment exemplified in the case of the target particle being a nucleic acid molecule in the aforementioned step (a).

There are no particular limitations on the concentration or number density of the target particles in the sample solution in step (c'). The concentration of target particles in the sample solution is preferably high from the viewpoint of shorting the measurement time of the scanning molecule counting method. However, if the concentration is excessively high, there is conversely the possibility of a decrease in measurement accuracy. Consequently, the sample solution is preferably prepared so that the number density of the target particles in the sample solution is 1 molecule or less per volume ($V_d$) of the aforementioned photodetection region. For example, the concentration $X_T$(M) of the target particles in the sample solution preferably satisfies the relationship of $X_T \cdot N_A \cdot V_d \leq 1$ (where, $N_A$ represents Avogadro's constant).

Examples

Although the following provides a more detailed explanation of the present invention by indicating examples and the like thereof, the present invention is not limited to the following examples.

[Example 1]

A comparison was made of the number of target particles counted between the case of detecting target particles in a sample solution directly according to the scanning molecule counting method, and the case of detecting target particles in a sample solution according to the scanning molecule counting method after having concentrated the target particles.

A single-stranded nucleic acid molecule was used for the target particle, a single-stranded nucleic acid molecule having a base sequence complementary to the single-stranded nucleic acid molecule and having ATTO™ 647N (Atto-Tec GmbH) bound to the 5'-terminal thereof was used as a luminescent probe, and a fluorescent-labeled double-stranded nucleic acid molecule (800 bp) obtained by hybridizing the target particle and luminescent probe was used as a target particle bound to a luminescent probe.

First, a 1 nM solution of the fluorescent-labeled double-stranded nucleic acid molecule was prepared for use as a test sample. The fluorescent-labeled double-stranded nucleic acid molecule solution was dispensed in 200 μL aliquots into two 1.5 mL tubes. After adding 20 μL of 3 M sodium acetate solution to each tube and stirring, 500 μL of 99.5% ethanol were added and stirred followed by allowing to stand undisturbed for 10 minutes at room temperature. Subsequently, each tube was subjected to centrifugal separation treatment for 10 minutes at 20,000 × g followed by removal of the supernatant. 500 μl of 70% ethanol were then added to the resulting precipitate and stirred, followed by subjecting to centrifugal separation treatment for 10 minutes at 20,000 × g and removing the supernatant. 200 μL of TE buffer were added to the precipitate obtained in one of the tubes, while 20 μL of TE buffer were added to the precipitate obtained in the other tube, followed by stirring each tube to dissolve the precipitate. The solution prepared from 200 μL of TE buffer was used as an ordinary specimen, while that prepared from 20 μL of TE buffer was used as a concentrated specimen.

Using each specimen as a sample solution, the number of fluorescent-labeled double-stranded nucleic acid molecules was counted according to the scanning molecule counting method. In addition, a sample solution consisting of TE buffer only was counted as a control. More specifically, the MF20 Single Molecule Fluorescence Spectroscopy System (Olympus Corp.) equipped with a confocal fluorescent microscope optical system and photon counting system was used as an optical analysis device during measurement. Chronological photon count data was acquired for each of the aforementioned sample solutions. At that time, laser light having a wavelength of 633 nm was used as excitation light, laser light was irradiated at a rotating speed of 6,000 rpm and 300 $\mu$W, and the detecting light wavelength was set to 660 nm to 710 nm using a band pass filter. Signals obtained from an avalanche diode were set to a bin time of 10 $\mu$s, and measurement time was set to 2 seconds or 20 seconds.

After smoothing the chronological data obtained from measurement using the Savinzky-Golay algorithm, peaks were detected by differentiation. Those regions considered to be peaks that were able to be approximated with a Gaussian function were extracted as signals.

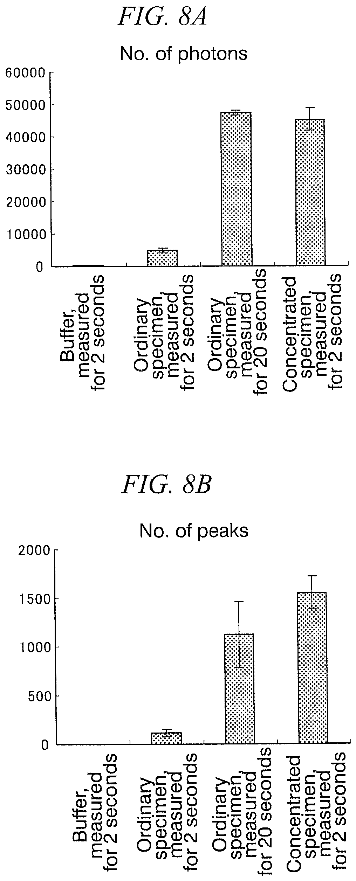

The results of counting are shown in FIG. 8A, FIG. 8B and Table 1. FIG. 8A shows the results of measuring photon counts. FIG. 8B shows the results of measuring the number of peaks. In FIG. 8A, FIG. 8B and Table 1, "buffer" indicates the results of counting a sample solution consisting of TE buffer only as a control. As a result, the number of photons and number of peaks for measuring the concentrated specimen for 2 seconds corresponds to measuring an ordinary, non-concentrated specimen for 20 seconds. Namely, even when measuring the same test sample, measurement time can clearly be shortened by concentrating in advance prior to measuring according to the scanning molecule counting method.

[Table 1]

| Specimen | Photon count | No. of peaks |
|---|---|---|
| Buffer, measured for 2 seconds | 465 | 0 |
| Ordinary specimen, measured for 2 seconds | 4739 | 112 |
| Ordinary specimen, measured for 20 seconds | 47385 | 1122 |
| Concentrated specimen, measured for 2 seconds | 45360 | 1549 |

[Example 2]

A comparison was made of counted number of target particles between the case of detecting target particles in a test sample directly according to the scanning molecule counting method and the case of detecting target particles in a test sample according to the scanning molecule counting method after having concentrated the target particles while using the fluorescent-labeled double-stranded nucleic acid molecules used in Example 1 as target molecules bound to a luminescent probe.

First, 5 mL of a 200 fM fluorescent-labeled double-stranded nucleic acid solution was prepared using TE buffer. 60 $\mu$L of this solution was used directly as sample solution for measuring according to the scanning molecule counting method (non-concentrated) . The entire remaining amount (4940 $\mu$L) was purified using the Wizard SV Gel and PCR Clean-Up Kit (Promega Corp.), and a solution eluted with 60 $\mu$L of TE buffer was used as a sample solution for measurement according to the scanning molecule counting method (concentrated). The concentration factor was about 82.3 (4940 $\mu$L/ 60 $\mu$L).

Next, the number of molecules of the fluorescent-labeled double-stranded nucleic acid molecules in each sample solution was counted according to the scanning molecule counting method under the same measurement conditions as Example 1. In addition, measurements were carried out 5 times for each sample, followed by calculation of the mean and standard deviation thereof.

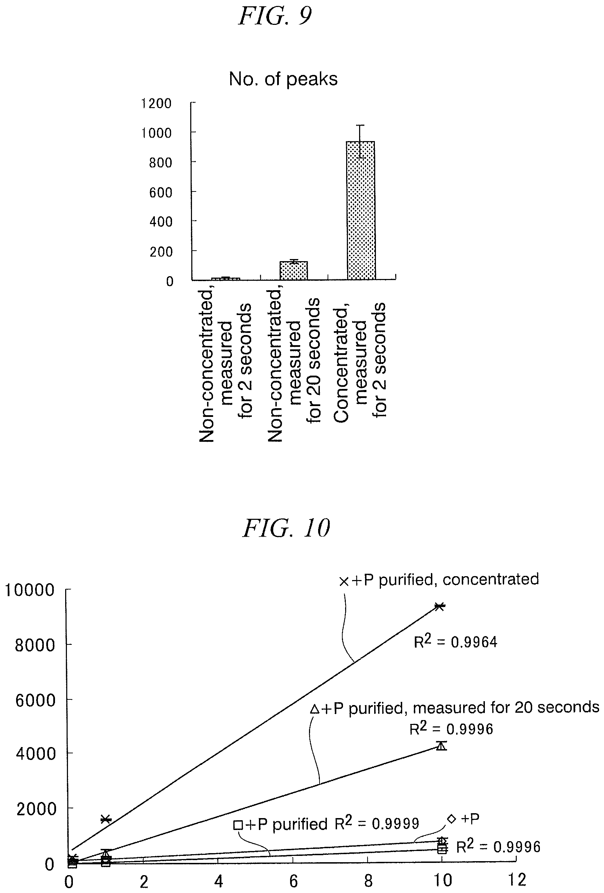

The results for counting the number of peaks are shown in FIG. 9 and Table 2. As a result, although the number of peaks was excessively low in the case of measuring the non-concentrated solution for 2 seconds, when it was measured for 20 seconds, an adequate number of peaks were detected. In contrast, an adequate number of peaks that was greater than that in the case of measuring non-concentrated sample solution for 20 seconds were detected by measuring the concentrated sample solution for 2 seconds. In addition, when the number of peaks obtained as a result of measuring the non-concentrated sample solution for 2 seconds was compared with the number of peaks obtained as a result of measuring the concentrated sample solution for 2 seconds, the value obtained by dividing the number of peaks obtained as a result of measuring the concentrated sample solution for 2 seconds (930) by the concentration factor (approximately 82. 3) was about 11.3, which was nearly equal to the number of peaks obtained as a result of measuring the non-concentrated sample solution for 2 seconds. In other words, the increase in the number of peaks was observed to coincide with the concentration factor. On the basis of these results, concentration of the sample solution was confirmed to allow more accurate detection even if the specimen yields an inadequate number of peaks by conventional measurement methods. Furthermore, the SD value was large and there was considerable variation in the case of measuring for 2 seconds after concentrating. However, CV% in the case of measuring the non-concentrated sample solution for 20 seconds was 8.9% and that in the case of measuring the concentrated sample solution for 2 seconds was 11.8%, thus demonstrating the absence of a large difference between the two.

[Table 2]

| Specimen | No. of peaks | SD |
|---|---|---|
| Non-concentrated, measured for 2 seconds | 12 | 11 |
| Non-concentrated, measured for 20 seconds | 124 | 11 |
| Concentrated, measured for 2 seconds | 930 | 110 |

[Example 3]

Using the fluorescent-labeled double-stranded nucleic acid molecule used in Example 1 as a target molecule bound to a luminescent probe, a comparison was made of the number of target particles counted between the case of having detected a target molecule in a test sample directly according to the scanning molecule counting method, and the case of having detected according to the scanning molecule counting method after having concentrated the test sample.

First, 5 mL aliquots of 100 fM, 1 pM and 10 pM fluorescent-labeled double-stranded nucleic acid molecule solutions were respectively prepared in three tubes using STEP buffer containing plasma (equine plasma) . 60 μL of the solution in one of the tubes were used as a sample solution for direct measurement according to the scanning molecule counting method (non-purified) . The entire amount of one of the remaining two tubes was purified using Genomic-tip 20/G (Qiagen Corp.), and the solution obtained by eluting with 5 mL of TE buffer was used as a sample solution for measurement according to the scanning molecule counting method (purified, non-concentrated). The entire amount of the remaining tube was purified using Genomic-tip 20/G (Qiagen Corp.), and a solution obtained by eluting with 500 μL of TE buffer was used as a sample solution for measurement according to the scanning molecule counting method (purified, concentrated).

Next, the number of fluorescent-labeled double-stranded nucleic acid molecules in each sample solution was counted according to the scanning molecule counting method under the same conditions as Example 1. In addition, measurements were carried out 5 times for each sample, followed by calculation of the mean and standard deviation thereof.

The counting results are shown in FIG. 10 and Table 3. In FIG. 10 and Table 3, "+P indicates the results of measuring the sample solution (non-purified) for 2 seconds", "+P purified" indicates the results of measuring the sample solution (purified, non-concentrated) for 2 seconds. In addition "+P purified, measured for 20 seconds" indicates the results of measuring the sample solution (purified, non-concentrated) for 2 seconds, while "+P purified, concentrated" indicates the results of measuring the sample solution (purified, concentrated) for 2 seconds. As a result, the result of measuring the sample solution (non-purified) for 2 seconds exhibited an extremely large number of peaks in comparison with the result of measuring the sample solution (purified, non-concentrated) . This is presumed to be due the occurrence of bias as a result of a large number of non-specific signals being formed caused by the presence of plasma in the sample solution. In addition, although peaks were obtained concentration-dependently as a result of measuring the sample solution (purified, non-concentrated) for 2 seconds, at the lowest concentration of 100 fM (0.1 pM), the number of peaks was inadequate. This is presumed to be due to a reduction in the number of opportunities to detect fluorescent-labeled double-stranded nucleic acid molecules due to the extremely low concentration of the fluorescent-labeled double-stranded nucleic acid molecules in the sample solution. On the other hand, despite using the same sample solution, an obviously larger number of peaks was detected as a result of measuring the sample solution (purified, non-concentrated) for 20 seconds in comparison with the result of measuring the sample solution (purified, non-concentrated) for 2 seconds. In other words, the number of peaks (opportunities for detection) was increased by prolonging measurement time. In contrast, the result of measuring the sample solution (purified, concentrated) for 2 seconds demonstrated a larger number of detected peaks than the result of measuring the sample solution (purified, non-concentrated) for 20 seconds at all concentrations, and the number of peaks detected increased concentration-dependently. Namely, purifying and concentrating a test sample in advance prior to measurement makes it possible to acquire a sufficient number of peaks in a short period of time, thereby making it possible shorten measurement time.

[Table 3]

| Concentration of fluorescent-labeled double-stranded nucleic acid molecules (pM) | No. of peaks | | | |
|---|---|---|---|---|
| | +P | +P purified | +P purified, measured for 20 seconds | +P purified, concentrated |
| 0.1 | 99 | 8 | 86 | 206 |

(continued)

| Concentration of fluorescent-labeled double-stranded nucleic acid molecules (pM) | No. of peaks | | | |
|---|---|---|---|---|
| | +P | +P purified | +P purified, measured for 20 seconds | +P purified, concentrated |
| 1 | 152 | 39 | 372 | 1598 |
| 10 | 738 | 454 | 4228 | 9320 |

[Example 4]

Using target particles bound to a single-stranded nucleic acid molecule and two probes, a comparison was made of the number of target particles counted between the case of detecting according to scanning molecule counting method without changing the concentration of target particles in the test sample, and the case of detecting according to the scanning molecule counting method after having concentrated the test sample.

A single-stranded nucleic acid molecule was used for the target particle, and a single-stranded nucleic acid molecule having a base sequence complementary to the single-stranded nucleic acid molecule and having ATTO™ 647N (Atto-Tec GmbH) bound to the 5'-terminal thereof (Probe 1), or a single-stranded nucleic acid molecule having a base sequence complementary to the single-stranded nucleic acid molecule and having biotin bound to the 3'-terminal thereof (Probe 2) was used as a luminescent probe. In addition, a fluorescent-labeled double-stranded nucleic acid molecule obtained by hybridizing the target particle and luminescent probe was used as a target particle bound to a luminescent probe. The synthesis of these oligonucleotides was commissioned to Sigma Science Corp. The base sequences of the single-stranded nucleic acid molecule and luminescent probes are shown in Table 4.

[Table 4]

| | Base Sequence |
|---|---|
| Single-stranded nucleic acid molecule | GACTGAATATAAACTTGTGGAGCCTGGGAAAGTCCCCTCAACT |
| Probe 1 | ATTO 647N-AGTTGAGGGGACTTTCCCAGGC |
| Probe 2 | CCACAAGTTTATATTCAGTC-Biotin |

First, a sample solution (300 $\mu$L) was prepared using Tris buffer (10 mM Tris-HCl, 400 mM NaCl, 0.05% Triton X-100) so that the concentration of the single-stranded nucleic acid molecule was 1 fM, the concentration of Probe 1 was 20 pM, the concentration of Probe 2 was 200 pM, and the concentration of Poly(deoxyinosinic-deoxycytidylic) acid (Sigma-Aldrich Corp.) was 0.1 U/mL (where, 1 U represents an amount that yields absorbance of 1.0 at 260 nm in water (optical path length: 1 cm)). A sample solution was also prepared that did not contain the single-stranded nucleic acid molecule. These sample solutions were heated for 5 minutes at 95°C followed by cooling to 25°C at an average rate of 0.1°C/minute.

Next, 1 $\mu$L of bovine serum albumin (BSA) was added to the aforementioned sample solutions followed by mixing with 10 $\mu$g of streptoavidin-coated magnetic beads (Invitrogen Corp.) and allowing to react by shaking for 90 minutes at 25°C. Continuing, the sample solutions were washed three times using a magnet while using 500 $\mu$L of Tris buffer (10 mM Tris-HCl, 400 mM NaCl, 0.05% Triton X-100). Subsequently, 30 $\mu$L and 300 $\mu$L of elution buffer (10 mM Tris-HCl, 0.05% Triton X-100) were added followed by allowing to stand for 5 minutes at 50°C. The supernatant was recovered after gathering the magnetic beads with a magnet. The recovered solutions were used as sample solutions for measurement according to the scanning molecule counting method. The solution eluted with 30 $\mu$L was designated as "concentrated", while the solution eluted with 300 $\mu$L was designated as "non-concentrated".

Next, the target particles in each sample solution were counted according to the scanning molecule counting method under the same conditions as Example 1. A sample solution containing Tris buffer only was used as a control. However, excitation light was irradiated at a rotating speed of 9,000 rpm and 1 mW. In addition, measurements were carried out under two conditions for measurement time of 60 seconds and 600 seconds. In addition, measurements were carried out 5 times for each sample, followed by calculation of the mean and standard deviation thereof.

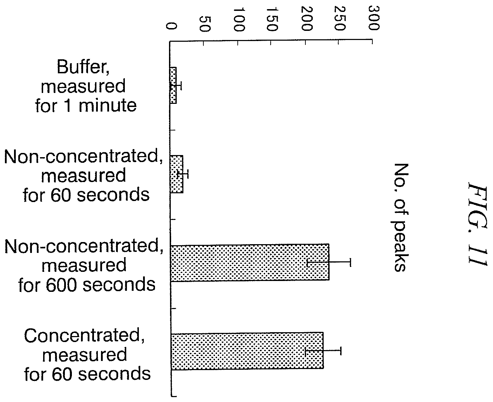

Results of counting the number of peaks are shown in FIG. 11 and Table 5. According to these results, an adequate number of peaks were not detected in the case of measuring the non-concentrated sample solution for 60 seconds. However, an adequate number of peaks were detected in the case of measuring for 600 seconds. In contrast, in the case of the concentrated sample solution, an adequate number of peaks were detected by measuring for 60 seconds that was roughly equal to the number of peaks detected by measuring the non-concentrated sample solution for 600 seconds. In addition, a comparison was made between the number of peaks obtained as a result of measuring the non-concentrated sample solution for 60 seconds and the number of peaks obtained by measuring the concentrated sample solution for 60 seconds. As a result, when the number of peaks obtained by measuring the concentrated sample solution for 60 seconds was divided by the concentration factor (10), the resulting value was about 22.5, which is roughly equal to the number of peaks obtained as a result of measuring the non-concentrated sample solution for 60 seconds. In other words, the increase in the number of peaks was observed to coincide with the concentration factor. On the basis of these results, concentration of the sample solution was confirmed to allow more accurate detection even if the specimen yields an inadequate number of peaks by conventional measurement methods as was similarly demonstrated in Example 2. Furthermore, CV% in the case of measuring for 60 seconds after concentration was 11.7%, and that in the case of measuring the non-concentrated sample solution for 60 seconds was 14.0%, thus demonstrating the absence of a large difference between the two.

[Table 5]

| Specimen | No. of peaks | SD |
|---|---|---|
| Buffer, measured for 60 seconds | 10 | 7 |
| Non-concentrated, measured for 60 seconds | 19 | 8 |
| Non-concentrated, measured for 600 seconds | 234 | 33 |
| Concentrated, measured for 60 seconds | 225 | 26 |

INDUSTRIAL APPLICABILITY

According to the aforementioned method for detecting target particles, since the concentration of target particles only present at an extremely low concentration in a sample solution can be measured according to a scanning molecule counting method in a short period of time, it can be used in clinical fields such as analysis and testing of samples in which the concentration of a substance to be analyzed is extremely low.

BRIEF DESCRIPTION OF THE REFERENCE SYMBOLS

1 Optical analysis device (confocal microscope)

2 Light source

3 Single-mode optic fiber

4 Collimator lens

5 Dichroic mirror

6,7,11 Reflecting mirror

8 Object lens

9 Microplate

10 Well (sample solution container)

12 Condenser lens

13 Pinhole

14 Barrier filter

15 Multi-mode optic fiber

16 Photodetector

17 Mirror light deflector

17a Stage position adjustment device

18 Computer

**Claims**

1.  A method for detecting a target particle dispersed and moving randomly in a sample solution, comprising:

    (a) a step for preparing the sample solution from a test sample comprising target particles and a luminescent probe that binds to the target particle;
    (b) a concentrating step which includes:

    (i) concentrating the test sample so as to enhance the concentration of target particles in the test sample, the sample solution being prepared using the concentrated test sample, or
    (ii) a concentration treatment being carried out so as to enhance the concentration of target particles in the sample solution after preparing the sample solution but before binding of the target particle and the luminescent probe, or
    (iii) a concentration treatment being carried out so as to enhance the concentration of target particles in the sample solution after binding of the target particle and the luminescent probe; and

    (c) a step for counting (S100-S180) the number of target particles, to which the said luminescent probe is bound, present in the sample solution prepared in step (b);

    wherein the step for preparing the sample solution comprises preparing the sample solution such that the number of target particles in the sample solution within a volume equal to the volume of a photodetection region of an optical system (7, 8) is below a predetermined threshold;
    wherein the luminescence properties of the released light (Em) differ between the state in which the luminescent probe is bound to the target particle and the state in which the luminescent probe is present alone, and
    counting of the number of target particles to which the said luminescent probe is bound in step (c) is carried out by:

    a step for moving a location of the photodetection region (CV) of the optical system (7, 8) in the sample solution using the optical system of a confocal microscope or multi-photon microscope, wherein the location of the photodetection region is moved at a speed sufficiently faster than the diffusion movement speed of the target particle to which the luminescent probe is bound in the step for moving the location of the photodetection region, wherein the speed for moving the location of the photodetection region is changed based on a property of the luminescent probe which is bound to the target particle, wherein the speed for moving the location of the photodetection region is determined based on a profile of an emitted light intensity from the luminescent probe as a function of time becoming a predicted profile,
    a step for individually detecting the target particles to which the said luminescent probe is bound by detecting a light signal released from the luminescent probe when bound to the target particle present in the photodetection region while moving the location of the photodetection region of the optical system in the sample solution, wherein the entry of a single target particle, to which the luminescent probe is bound, into the photodetection region is detected based on the shape as a function of time of a detected chronological light signal corresponding to the entry of the single target particle into the photo-detection region, and
    a step for counting the number of target particles detected during movement of the location of the photodetection region by counting (S150, S160) the number of individually detected target particles to which the said luminescent probe is bound.

2.  The method for detecting a target particle according to claim 1, wherein the number of the target particles in the sample solution within the volume equal to the volume of the photodetection region of the optical system (7, 8) is less than or equal to 1 molecule per volume ($V_d$) of the photodetection region.

3.  The method for detecting a target particle according to claim 1 or 2, wherein the target particle is a nucleic acid molecule, and step (b) is a step for purifying and concentrating the nucleic acid molecule in the test sample.

4. The method for detecting a target particle according to claim 1 or claim 2, wherein step (b) is a step for specifically recovering and concentrating the target particle from the test sample.

5. The method for detecting a target particle according to any of claims 1 to 4, wherein the luminescent probe has an energy donor site and energy acceptor site that cause the occurrence of a fluorescence energy transfer phenomenon when a luminescent probe mutually approaches, the distance between the energy donor site and the energy acceptor site differs between the state in which the luminescent probe is bound to the particle and the state in which the luminescent probe is not bound to the particle, and

luminescence properties of light released from the luminescent probe differs between the state in which the luminescent probe is bound to the target particle and the state in which the luminescent probe is present alone.

6. The method for detecting a target particle according to any of claims 1 to 5, wherein the target particle is a nucleic acid, and

the luminescent probe is a single-stranded nucleic acid that specifically hybridizes with the target particle, and to which is bound at least one of a fluorescent substance composing an energy donor and a substance composing an energy acceptor in fluorescence energy transfer phenomenon.

7. The method for detecting a target particle according any of claims 1 to 6, wherein detecting the single target particle includes smoothing (S110) the detected chronological light signal, and wherein the entry of the single target particle is detected based on the shape of the smoothed chronological light signal.

**Patentansprüche**

1. Verfahren zum Detektieren eines Zielpartikels, das in einer Probenlösung verteilt ist und sich darin wahllos bewegt, umfassend:

(a) einen Schritt zum Präparieren der Probenlösung aus einer Testprobe, die Zielpartikel und einen Lumineszenz-Tester, der sich an das Zielpartikel bindet, umfasst;
(b) einen Konzentrationsschritt, der beinhaltet:

(i) ein Konzentrieren der Testprobe, um die Konzentration von Zielpartikeln in der Testprobe zu erhöhen, wobei die Probenlösung unter Benutzung der konzentrierten Testprobe hergestellt wird, oder
(ii) eine Konzentrationsbehandlung, die ausgeführt wird, um die Konzentration von Zielpartikeln in der Probenlösung nach einem Präparieren der Probenlösung, aber vor einem Binden des Zielpartikels und des Lumineszenz-Testers zu erhöhen, oder
(iii) eine Konzentrationsbehandlung, die ausgeführt wird, um die Konzentration von Zielpartikeln in der Probenlösung nach einem Binden des Zielpartikels und des Lumineszenz-Testers zu erhöhen; und

(c) einen Schritt zum Zählen (S100-S180) der Anzahl von Zielpartikeln, an die der Lumineszenz-Tester gebunden ist, die in der Probenlösung, die in Schritt (b) hergestellt wird, vorhanden sind;

wobei der Schritt zum Präparieren der Probenlösung ein Präparieren der Probenlösung umfasst, sodass die Anzahl von Zielpartikeln in der Probenlösung innerhalb eines Volumens, das gleich dem Volumen eines Photodetektionsbereiches eines optischen Systems (7, 8) ist, unterhalb einem vorbestimmten Grenzwert liegt;
wobei sich die Lumineszenz-Eigenschaften des freigegebenen Lichts (Em) zwischen dem Stadium, in dem der Lumineszenz-Tester an das Zielpartikel gebunden ist, und dem Stadium, in dem der Lumineszenz-Tester allein vorhanden ist, unterscheiden, und
das Zählen der Anzahl von Zielpartikeln, an die der Lumineszenz-Tester gebunden ist, in Schritt (c) wird durchgeführt durch:

einen Schritt zum Verschieben einer Position des Photodetektionsbereiches (CV) des optischen Systems (7, 8) in der Probenlösung unter Benutzung des optischen Systems eines konfokalen Mikroskops oder Multi-Photonen-Mikroskops, wobei die Position des Photodetektionsbereiches im Schritt zum Verschieben der Position des Photodetektionsbereiches mit einer Geschwindigkeit verschoben wird, die ausreichend schneller ist als die Diffusionsbewegungsgeschwindigkeit des Zielpartikels, an die der Lumineszenz-Tester gebunden ist, wobei

27

die Geschwindigkeit zum Verschieben der Position des Photodetektionsbereiches basierend auf einer Eigenschaft des Lumineszenz-Testers, der an das Zielpartikel gebunden ist, geändert wird, wobei die Geschwindigkeit zum Verschieben der Position des Photodetektionsbereiches darauf basierend bestimmt wird, dass ein Profil einer emittierten Lichtintensität von dem Lumineszenz-Tester als Funktion der Zeit zu einem vorhergesagten Profil wird,

einen Schritt zum individuellen Detektieren der Zielpartikel, an die der Lumineszenz-Tester gebunden ist, durch ein Detektieren eines Lichtsignals, das vom Lumineszenz-Tester freigegeben wird, wenn dieser an das Zielpartikel, das im Photodetektionsbereich vorhanden ist, gebunden ist, während die Position des Photodetektionsbereiches des optischen Systems in der Probenlösung verschoben wird,

wobei der Eintritt eines einzelnen Zielpartikels, an das der Lumineszenz-Tester gebunden ist, in den Photodetektionsbereich basierend auf einer Form als Funktion der Zeit eines detektierten, chronologischen Lichtsignals, das dem Eintritt des einzelnen Zielpartikels in den Photodetektionsbereich entspricht, detektiert wird, und

einen Schritt zum Zählen der Anzahl von Zielpartikeln, die während der Verschiebung der Position des Photodetektionsbereiches detektiert werden, durch ein Zählen (S150, S160) der Anzahl von individuell detektierten Zielpartikeln, an die der Lumineszenz-Tester gebunden ist.

2. Verfahren zum Detektieren eines Zielpartikels nach Anspruch 1, wobei die Anzahl von Zielpartikeln in der Probenlösung innerhalb des Volumens, das gleich dem Volumen des Photodetektionsbereiches des optischen Systems (7, 8) ist, geringer als oder gleich 1 Molekül pro Volumen ($V_d$) des Photodetektionsbereiches ist.

3. Verfahren zum Detektieren eines Zielpartikels nach Anspruch 1 oder 2, wobei das Zielpartikel ein Nukleinsäure-Molekül ist, und Schritt (b) ein Schritt zum Reinigen und Konzentrieren des Nukleinsäure-Moleküls in der Testprobe ist.

4. Verfahren zum Detektieren eines Zielpartikels nach Anspruch 1 oder 2, wobei Schritt (b) ein Schritt zum speziellen Wiedererlangen und Konzentrieren des Zielpartikels aus der Testprobe ist.

5. Verfahren zum Detektieren eines Zielpartikels nach einem der Ansprüche 1 bis 4, wobei der Lumineszenz-Tester eine Energiedonatorlage und eine Energieakzeptorlage hat, die das Auftreten eines Fluoreszenz-Energieübertragungsphänomens verursachen, wenn ein Lumineszenz-Tester beiderseitig näher rückt, wobei der Abstand zwischen der Energiedonatorlage und der Energieakzeptorlage sich zwischen dem Stadium, in dem der Lumineszenz-Tester an das Partikel gebunden ist, und dem Stadium, in dem der Lumineszenz-Tester nicht an das Partikel gebunden ist, unterscheidet, und

Lumineszenz-Eigenschaften des Lichts, das vom Lumineszenz-Tester freigegeben wird, sich zwischen dem Stadium, in dem der Lumineszenz-Tester an das Zielpartikel gebunden ist, und dem Stadium, in dem der Lumineszenz-Tester allein vorhanden ist, unterscheidet.

6. Verfahren zum Detektieren eines Zielpartikels nach einem der Ansprüche 1 bis 5, wobei das Zielpartikel eine Nukleinsäure ist, und

der Lumineszenz-Tester eine einzelsträngige Nukleinsäure ist, die speziell mit dem Zielpartikel hybridisiert, und an die zumindest eine aus einer fluoreszierende Substanz, die einen Energiedonor bildet, und einer Substanz, die einen Erergieakzeptor bildet, im Fluoreszenz-Energieübertragungsphänomen gebunden ist.

7. Verfahren zum Detektieren eines Zielpartikels nach einem der Ansprüche 1 bis 6, wobei das Detektieren des einzelnen Zielpartikels ein Glätten (S110) des detektierten, chronologischen Lichtsignals beinhaltet, und wobei der Eintritt des einzelnen Zielpartikels basierend auf der Form des geglätteten, chronologischen Lichtsignals detektiert wird.

**Revendications**

1. Procédé de détection d'une particule cible dispersée et se déplaçant de manière aléatoire dans une solution d'échantillon, comprenant :

(a) une étape de préparation de la solution d'échantillon à partir d'un échantillon d'essai comprenant des particules cibles et d'une sonde luminescente qui se lie à la particule cible ;
(b) une étape de concentration qui comprend :

(i) la concentration de l'échantillon d'essai de sorte à augmenter la concentration des particules cibles dans l'échantillon d'essai, la solution d'échantillon étant préparée à l'aide de l'échantillon d'essai concentré, ou

(ii) un traitement de concentration étant réalisé de sorte à augmenter la concentration des particules cibles dans la solution d'échantillon après la préparation de la solution d'échantillon mais avant la liaison de la particule cible et de la sonde luminescente, ou

(iii) un traitement de concentration étant réalisé de sorte à augmenter la concentration des particules cibles dans la solution d'échantillon après la liaison de la particule cible et de la sonde luminescente ; et

(c) une étape de comptage (S100 à S180) du nombre de particules cibles, auxquelles ladite sonde luminescente est liée, présentes dans la solution d'échantillon préparée à l'étape (b) ;

dans lequel l'étape de préparation de la solution d'échantillon comprend la préparation de la solution d'échantillon de sorte que le nombre de particules cibles dans la solution d'échantillon au sein d'un volume égal au volume d'une région de photo-détection d'un système optique (7, 8) est inférieur à un seuil prédéterminé ;

dans lequel les propriétés de luminescence de la lumière libérée (Em) diffèrent entre l'état dans lequel la sonde luminescente est liée à la particule cible et l'état dans lequel la sonde luminescente est présente seule, et

le comptage du nombre de particules cibles auxquelles ladite sonde luminescente est liée à l'étape (c) est réalisé par :

une étape de déplacement d'un emplacement de la région de photo-détection (CV) du système optique (7, 8) dans la solution échantillon au moyen du système optique d'un microscope confocal ou d'un microscope multiphotonique, dans lequel l'emplacement de la région de photo-détection est déplacé à une vitesse suffisamment plus rapide que la vitesse de mouvement de diffusion de la particule cible à laquelle la sonde luminescente est liée à l'étape de déplacement de l'emplacement de la région de photo-détection, dans lequel la vitesse de déplacement de l'emplacement de la région de photo-détection est modifiée sur la base d'une propriété de la sonde luminescente qui est liée à la particule cible, dans lequel la vitesse de déplacement de l'emplacement de la région de photo-détection est déterminée sur la base d'un profil d'une intensité de lumière émise à partir de la sonde luminescente en fonction du temps devenant un profil prédit,

une étape de détection individuelle des particules cibles auxquelles ladite sonde luminescente est liée par détection d'un signal lumineux libéré à partir de la sonde luminescente lorsqu'elle est liée à la particule cible présente dans la région de photo-détection tout en déplaçant l'emplacement de la région de photo-détection du système optique dans la solution d'échantillon, dans lequel l'entrée d'une unique particule cible, à laquelle la sonde luminescente est liée, dans la région de photo-détection est détectée sur la base de la forme en fonction du temps d'un signal de lumière chronologique détecté correspondant à l'entrée de l'unique particule cible dans la région de photo-détection, et

une étape de comptage du nombre de particules cibles détectées pendant le déplacement de l'emplacement de la région de photo-détection par comptage (S150, S160) du nombre de particules cibles détectées individuellement auxquelles ladite sonde luminescente est liée.

2. Procédé de détection d'une particule cible selon la revendication 1, dans lequel le nombre des particules cibles dans la solution d'échantillon au sein du volume égal au volume de la région de photo-détection du système optique (7, 8) est inférieur ou égal à 1 molécule par volume ($V_d$) de la région de photo-détection.

3. Procédé de détection d'une particule cible selon la revendication 1 ou 2, dans lequel la particule cible est une molécule d'acide nucléique, et l'étape (b) est une étape de purification et de concentration de la molécule d'acide nucléique dans l'échantillon d'essai.

4. Procédé de détection d'une particule cible selon la revendication 1 ou la revendication 2, dans lequel l'étape (b) est une étape de concentration et récupération spécifiques de la particule cible à partir de l'échantillon d'essai.

5. Procédé de détection d'une particule cible selon l'une quelconque des revendications 1 à 4, dans lequel la sonde luminescente a un site donneur d'énergie et un site accepteur d'énergie qui provoquent l'apparition d'un phénomène de transfert d'énergie de fluorescence lorsqu'une sonde luminescente se rapproche mutuellement, la distance entre le site donneur d'énergie et le site accepteur d'énergie diffère entre l'état dans lequel la sonde luminescente est liée à la particule et l'état dans lequel la sonde luminescente n'est pas liée à la particule, et

les propriétés de luminescence de la lumière libérée à partir de la sonde luminescente diffèrent entre l'état dans lequel la sonde luminescente est liée à la particule cible et l'état dans lequel la sonde luminescente est présente seule.

6. Procédé de détection d'une particule cible selon l'une quelconque des revendications 1 à 5, dans lequel la particule cible est un acide nucléique, et
la sonde luminescente est un acide nucléique monocaténaire qui s'hybride spécifiquement avec la particule cible, et auquel est liée au moins une substance parmi une substance fluorescente composant un donneur d'énergie et une substance composant un accepteur d'énergie dans un phénomène de transfert d'énergie par fluorescence.

7. Procédé de détection d'une particule cible selon l'une quelconque des revendications 1 à 6, dans lequel la détection de l'unique particule cible comprend le lissage (S110) du signal de lumière chronologique détecté, et dans lequel l'entrée de l'unique particule cible est détectée sur la base de la forme du signal de lumière chronologique lissé.

## FIG. 1A

## FIG. 1B

## FIG. 1C

## FIG. 2A

## FIG. 2B

## FIG. 3A

## FIG. 3B

## FIG. 4A

## FIG. 4B

## FIG. 5

```
     ╭─────────────────────────────────╮
     │      Scanning molecule counting │
     │   method data analysis procedure│
     ╰─────────────────────────────────╯
                      │
                      ▼
 S100 ┌─────────────────────────────────┐
      │   Acquisition of chronological   │
      │        light signal data,        │
      │   scanning of sample solution,   │
      │        photon counting           │
      └─────────────────────────────────┘
                      │
                      ▼
 S110 ┌─────────────────────────────────┐
      │      Smoothing processing of     │
      │   chronological light signal data│
      └─────────────────────────────────┘
                      │
                      ▼
 S120 ┌─────────────────────────────────────────┐
      │ Time differentiation processing of       │
      │ chronological light signal data after     │
      │ smoothing                                 │
      └─────────────────────────────────────────┘
                      │
                      ▼◄──────────────────────┐
 S130 ┌─────────────────────────────────────────┐  │
      │ Detection of regions where peaks are      │  │
      │ present Detection of regions where peaks  │  │
      │ are present based on data derivatives     │  │
      └─────────────────────────────────────────┘  │
                      │                             │
                      ▼                             │
 S140 ┌─────────────────────────────────────────┐  │
      │ Fitting of bell-shaped function Fitting of│  │
      │ bell-shaped function to smoothened        │  │
      │ chronological light signal data in regions│  │
      │ where peaks are present → Calculation of  │  │
      │ bell-function parameters                   │  │
      └─────────────────────────────────────────┘  │
                      │                             │
                      ▼                             │
 S150 ┌─────────────────────────────────────────┐  │
      │ Detection of presence of single particle  │  │
      │ Threshold-based judgment of               │  │
      │ bell-shaped function parameters Removal   │  │
      │ of noise                                   │  │
      └─────────────────────────────────────────┘  │
                      │                             │
                      ▼                   ┌──────────────────┐
 S160 ┌──────────────────────────────┐   │ To detection of  │
      │ Number of particles counted   │   │   next peak      │
      │ Output of bell-shaped         │   └──────────────────┘
      │ function coefficient, etc.    │            ▲
      └──────────────────────────────┘            │
                      │                            │
                      ▼                            │
 S170          ◇─────────────────◇                │
              ╱  Processing        ╲      No       │
             ◇ of all data completed ◇────────────┘
              ╲         ?           ╱
               ◇─────────────────◇
                      │ Yes
                      ▼
 S180 ┌──────────────────────────────┐
      │ Calculation of concentration  │
      │      Other analyses           │
      └──────────────────────────────┘
```

## *FIG. 6A*

## *FIG. 6B*

Detection Results (unprocessed)

Photon count

Smoothing

Smoothed curve

Time differentiation

Peak starting point

Peak ending point

Peak starting point

Peak ending point

First derivative curve

Bell-shaped function fitting

Fitting curve

Fitting curve

Imax

Imax

W

W

*FIG. 7*

## FIG. 8A

### No. of photons

## FIG. 8B

### No. of peaks

## FIG. 9

No. of peaks

## FIG. 10

×+P purified, concentrated
$R^2 = 0.9964$

△+P purified, measured for 20 seconds
$R^2 = 0.9996$

□+P purified $R^2 = 0.9999$   ◇ +P
$R^2 = 0.9996$

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011142033 A
- JP 2005098876 A
- JP 2008292371 A
- JP 4023523 B
- WO 2008080417 A
- JP 2007020565 A
- JP 2008116440 A
- JP H4337446 B
- JP 2008000045 A

- JP 2003344288 A
- JP 2006526591 W
- JP 2002528093 W
- JP 2009518020 W
- US 20090159812 A1
- US 20060219939 A1
- US 20090312188 A1
- JP 2010044714 A


**Non-patent literature cited in the description**

- **KINJO, M.** *Proteins, Nucleic Acids and Enzymes,* 1999, vol. 44 (9), 1431-1438
- **MEYER-ALMS.** Fluorescence Correlation Spectroscopy. Springer, 2000, 204-224

- **KATO, N. et al.** *Gene & Medicine,* 2002, vol. 6 (2), 271-277